(19) Europäisches Patentamt
European Patent Office
Office européen des brevets

(11) **EP 4 215 873 B1**

(12) **EUROPEAN PATENT SPECIFICATION**

(45) Date of publication and mention
of the grant of the patent:
**13.08.2025 Bulletin 2025/33**

(21) Application number: **21884969.3**

(22) Date of filing: **18.10.2021**

(51) International Patent Classification (IPC):
**G01C 21/16** (2006.01)     **G01S 19/48** (2010.01)
**G01S 19/14** (2010.01)     **G01S 19/39** (2010.01)
**G01S 5/00** (2006.01)

(52) Cooperative Patent Classification (CPC):
**G01C 21/165; G01S 19/14; G01S 19/396;
G01S 19/48;** G01S 5/0072

(86) International application number:
**PCT/CN2021/124445**

(87) International publication number:
**WO 2022/089241 (05.05.2022 Gazette 2022/18)**

(54) **AUTOMOBILE POSITIONING METHOD AND APPARATUS**

VERFAHREN UND VORRICHTUNG ZUR POSITIONIERUNG EINES KRAFTFAHRZEUGS

PROCÉDÉ ET APPAREIL DE POSITIONNEMENT D'AUTOMOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2020 CN 202011194287**

(43) Date of publication of application:
**26.07.2023 Bulletin 2023/30**

(73) Proprietor: **Shenzhen Yinwang Intelligent
Technologies Co., Ltd.
Shenzhen, Guangdong 518129 (CN)**

(72) Inventors:
• **CHEN, Chaoyue**
**Shenzhen, Guangdong 518129 (CN)**
• **HU, Weilong**
**Shenzhen, Guangdong 518129 (CN)**
• **WANG, Shunyao**
**Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
CN-A- 106 710 281     CN-A- 106 710 281
CN-A- 107 657 824     CN-A- 108 121 003
CN-A- 108 957 506     CN-A- 110 687 562
US-A1- 2011 320 121     US-A1- 2016 332 624
US-A1- 2017 184 726

## Description

This application claims priority to Chinese Patent Application No. 202011194287.8, filed with the China National Intellectual Property Administration on October 30, 2020 and entitled "VEHICLE POSITIONING METHOD AND APPARATUS".

## TECHNICAL FIELD

This application relates to the field of autonomous driving technologies, and in particular, to a vehicle positioning method and apparatus.

## BACKGROUND

With support of an Internet of Vehicles technology and an artificial intelligence technology, an autonomous driving technology can improve travel efficiency, reduce energy consumption, and improve security to some extent. The autonomous driving technology has been a complete, secure, and effective cutting-edge technology. A vehicle positioning technology is an important basis and a key technology of an autonomous driving function. A loss of positioning may cause a self-driving car to fail to run normally, and may cause a major accident.

Currently, for autonomous driving positioning, a global positioning system (Global Positioning System, GPS for short) and an inertial measurement unit (Inertial Measuring Unit, IMU for short) is generally used for positioning to obtain a relatively high-precision positioning result. Sometimes, the IMU is constrained by using a laser and vision based simultaneous localization and mapping (simultaneous localization and mapping, SLAM for short) technology, to correct a vehicle position.

However, the foregoing method is greatly affected by an external environment, and especially in some special scenarios, for example, in a tunnel, a GPS fails, visual and laser features are reduced, and an IMU loses most constraints. Consequently, a positioning result is inaccurate, and it is difficult to implement global positioning of a vehicle.

Document CN 106710281 A discloses a cooperative positioning method for determining the host vehicle position on the basis of positioning data of a second vehicle.

## SUMMARY

Embodiments of this application provide a vehicle positioning method and apparatus, so that when a GPS fails or a vehicle-mounted sensor of a to-be-positioned vehicle is faulty, global positioning information of the to-be-positioned vehicle may be calculated by using vehicle information of a surrounding vehicle, thereby improving accuracy of a vehicle positioning result in a special scenario, and improving robustness of a vehicle positioning system.

According to a first aspect, an embodiment of this application provides a vehicle positioning method, including: obtaining a global positioning system GPS position covariance of a to-be-positioned vehicle; when the GPS position covariance is less than or equal to a preset position covariance threshold, obtaining initial position information of the to-be-positioned vehicle and vehicle information of a surrounding vehicle, where the surrounding vehicle is a vehicle whose distance from the to-be-positioned vehicle is less than a preset distance threshold, and the vehicle information includes distance information and vehicle speed information; determining a first position reckoning result of the surrounding vehicle based on the initial position information of the to-be-positioned vehicle and the vehicle information of the surrounding vehicle; and determining a second position reckoning result of the to-be-positioned vehicle based on the first position reckoning result.

It should be understood that the to-be-positioned vehicle may be a vehicle that needs to be positioned because a GPS fails in an environment such as a tunnel, a residential area, or an underground parking lot, or may be a vehicle whose vehicle-mounted sensor is faulty and that cannot be positioned by obtaining surrounding environment information. The faulty vehicle-mounted sensor may be a vehicle-mounted sensor such as a laser radar or an ultrasonic radar. A device for obtaining the vehicle information of the surrounding vehicle may be a device such as a vehicle-mounted camera, a millimeter-wave radar sensor, and a vehicle to everything (vehicle to everything, V2X for short) broadcast communicator. A device for determining a position reckoning result may be a vehicle-mounted terminal, or may be a device such as a server or a cloud.

In the foregoing method, when the GPS fails or the vehicle-mounted sensor is faulty and vehicle positioning cannot be performed, the positioning information of the to-be-positioned vehicle may be calculated by obtaining information about the surrounding vehicle, so that a possibility of a safety accident caused by a positioning loss of the vehicle can be effectively reduced, and accuracy of a vehicle positioning result can be improved.

In an optional implementation, the vehicle information of the surrounding vehicle further includes identification information of the surrounding vehicle, orientation information of the surrounding vehicle, and information about an angle difference between the surrounding vehicle and the to-be-positioned vehicle, and the orientation information includes yaw angle information of the surrounding vehicle, pitch angle information of the surrounding vehicle, and roll angle information of the surrounding vehicle; the distance information includes information about a horizontal distance between the surrounding vehicle and the to-be-positioned vehicle, and information about a vertical distance between the surrounding vehicle and the to-be-positioned vehicle; and the vehicle speed information includes the vehicle speed information of the surrounding vehicle and yaw angular velocity information of the surrounding vehicle.

In an optional implementation, the determining a first position reckoning result of the surrounding vehicle based on the initial position information of the to-be-positioned vehicle and the vehicle information of the surrounding vehicle includes: establishing a vehicle tracking table based on the vehicle information of the surrounding vehicle; obtaining initial position information of the surrounding vehicle based on the vehicle tracking table and the initial position information of the to-be-positioned vehicle by using an initial position reckoning algorithm; and obtaining the first position reckoning result based on the initial position information of the surrounding vehicle and the vehicle information of the surrounding vehicle by using a first position reckoning algorithm.

In an optional implementation, the initial position information of the surrounding vehicle includes first initial position coordinates $(x_{i\_t0}, y_{i\_t0}, z_{i\text{-}t0}, yaw_{i\_t0}, pitch_{i\_t0}, roll_{i\_t0})$, the initial position information of the to-be-positioned vehicle includes second initial position coordinates $(x_{t0}, y_{t0}, z_{t0}, yaw_{t0}, pitch_{t0}, roll_{t0})$, and the initial position reckoning algorithm includes:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

and

$$roll_{i\_t0} = roll_{t0},$$

where

$x_{i\text{-}t0}$, $y_{i\_t0}$, $z_{i\_t0}$, $yaw_{i\_t0}$, $pitch_{i\_t0}$, and $roll_{i\_t0}$ respectively represent coordinate information in a preset x-coordinate axis direction, coordinate information in a preset y-coordinate axis direction, coordinate information in a preset z-coordinate axis direction, yaw angle information, pitch angle information, and roll angle information that are of a surrounding vehicle numbered $i$ and that are at an initial moment $t_0$, $x_{t0}$, $y_{t0}$, $z_{t0}$, $yaw_{t0}$, $pitch_{t0}$, and $roll_{t0}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the initial moment $t_0$, $lx_{i\_t0}$ and $ly_{i\_t0}$ respectively represent information about a horizontal distance and information about a vertical distance between the surrounding vehicle numbered i and the to-be-positioned vehicle at the initial moment $t_0$, and $lyaw_{i\_t0}$ represents information about an angle difference between the surrounding vehicle numbered i and the to-be-positioned vehicle at the initial moment $t_0$.

In an optional implementation, the first position reckoning result includes first position reckoning coordinates $(x_{i\_t}, y_{i\_t}, z_{i\_t}, yaw_{i\_t}, pitch_{i\text{-}t}, roll_{i\_t})$, and the first position reckoning algorithm includes:

$$yaw_{i\_t} = yaw_{i\_t-\Delta t} + yawrate_{i\_t} * \Delta t;$$

$$pitch_{i\_t} = pitch_{i\_t-\Delta t};$$

$$roll_{i\_t} = roll_{i\_t-\Delta t};$$

$$x_{i\_t} = x_{i\_t-\Delta t} + v_{i\_t} * \cos yaw_{i\_t} * \Delta t;$$

$$y_{i\_t} = y_{i\_t-\Delta t} + v_{i\_t} * \sin yaw_{i\_t} * \Delta t;$$

and

$$z_{i\_t} = z_{i\_t-\Delta t},$$

where

$$x_{i\_t}, \ y_{i\_t}, \ z_{i\_t}, \ yaw_{i\_t}, \ pitch_{i\_t},$$

and $roll_{i\_t}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the surrounding vehicle numbered $i$ and that are at a moment $t$, $x_{i\_t-\Delta t}, y_{i\_t-\Delta t}, z_{i\_t-\Delta t}, yaw_{i\_t-\Delta t}, pitch_{i\_t-\Delta t}$, and $roll_{i\_t-\Delta t}$ respectively represent coordinate information in the preset x-coordinate axis direction, coordinate information in the preset y-coordinate axis direction, coordinate information in the preset z-coordinate axis direction, roll angle information, pitch angle information, and roll angle information that are of the surrounding vehicle numbered $i$ and that are at the moment $t - \Delta t$, $yawrate_{i\_t}$ represents yaw angular velocity information that is of the surrounding vehicle numbered $i$ and that is at the moment $t$, $\Delta t$ is a preset time interval, and $v_{i\_t}$ represents vehicle speed information that is of the surrounding vehicle numbered $i$ and that is at the moment $t$.

According to the foregoing method, the vehicle information of the surrounding vehicle is obtained, and the first position reckoning result of the surrounding vehicle is obtained through reckoning, so that the positioning information of the surrounding vehicle can be obtained through calculation in an environment in which a GPS fails, and the positioning information is used as basic information for calculating a positioning result of the to-be-positioned vehicle, thereby improving robustness of the positioning system.

In an optional implementation, the determining a second position reckoning result of the to-be-positioned vehicle based on the first position reckoning result includes: obtaining the information about the angle difference between the surrounding vehicle and the to-be-positioned vehicle, the information about the horizontal distance between the surrounding vehicle and the to-be-positioned vehicle, and the information about the vertical distance between the surrounding vehicle and the to-be-positioned vehicle; and obtaining the second position reckoning result with reference to the first position reckoning result by using a second position reckoning algorithm.

In an optional implementation, the second position reckoning result includes second position reckoning coordinates $(x_t, y_t, z_t, yaw_t, pitch_t, roll_t)$, and the second position reckoning algorithm includes:

$$x_t = x_{i\_t} - lx_{i\_t};$$

$$y_t = y_{i\_t} - ly_{i\_t};$$

$$z_t = z_{i\_t};$$

$$yaw_t = yaw_{i\_t} - lyaw_{i\_t};$$

$$pitch_t = pitch_{i\_t};$$

and

$$roll_t = roll_{i\_t},$$

where

$x_t, y_t, z_t, yaw_t, pitch_t,$ and $roll_t$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the moment $t$, $x_{i\_t}, y_{i\_t}, z_{i\_t}, yaw_{i\_t}, pitch_{i\_t},$ and $roll_{i\_t}$ respectively represent the coordinate information in the preset x-coordinate axis direction, the coordinate information in the preset y-coordinate axis direction, the coordinate information in the preset z-coordinate axis direction, the yaw angle information, the pitch angle information, and the roll angle information that are of the surrounding vehicle numbered $i$ and that are at the moment $t$, $lx_{i\_t}$ and $ly_{i\_t}$ respectively represent information about a horizontal distance and information about a vertical distance between the surrounding vehicle numbered $i$ and the to-be-positioned vehicle at the moment $t$, and $lyaw_{i\_t}$ represents information about an angle difference between the surrounding vehicle numbered $i$ and the to-be-positioned vehicle at the moment $t$.

According to the foregoing method, the information about the angle difference between the surrounding vehicle and the to-be-positioned vehicle and the information about the distance between the surrounding vehicle and the to-be-positioned vehicle are obtained, and the position reckoning result of the to-be-positioned vehicle is obtained through calculation by using the second position reckoning algorithm. In this way, the positioning information of the to-be-positioned vehicle can be calculated based on the vehicle information of the surrounding vehicle in a vehicle running process, thereby reducing a positioning error of the to-be-positioned vehicle, and implementing global positioning of the to-be-positioned vehicle.

In an optional implementation, before the determining a first position reckoning result of the surrounding vehicle based on the initial position information of the to-be-positioned vehicle and the vehicle information of the surrounding vehicle, the method further includes: determining whether the GPS position covariance is greater than the preset position covariance threshold, and if the GPS position covariance is greater than the preset position covariance threshold, performing the determining a first position reckoning result of the surrounding vehicle based on the initial position information of the to-be-positioned vehicle and the vehicle information of the surrounding vehicle.

According to the foregoing method, a value relationship between the GPS position covariance and the preset position covariance threshold is determined, and when the GPS position covariance is greater than the preset position covariance threshold, the vehicle positioning method provided in this embodiment of this application is enabled. Therefore, when accuracy of a positioning result is reduced due to a GPS failure or a vehicle-mounted sensor fault, the positioning system can be constrained by using the vehicle information of the surrounding vehicle, thereby effectively preventing a harm caused by a GPS positioning loss, and improving accuracy of a positioning result of the to-be-positioned vehicle.

In an optional implementation, when a quantity N of surrounding vehicles is greater than 1, N vehicles of the surrounding vehicles correspond to N first position reckoning results, and the determining a second position reckoning result of the to-be-positioned vehicle based on the first position reckoning result includes: respectively determining, based on the N first position reckoning results, N second position reckoning results corresponding to the to-be-positioned vehicle, calculating a positioning result average value of the N second position reckoning results, and using the positioning result average value as a final second position reckoning result of the to-be-positioned vehicle.

According to the foregoing method, when the quantity of surrounding vehicles is greater than 1, a second position reckoning result of the to-be-positioned vehicle relative to each surrounding vehicle is calculated. The positioning result of the to-be-positioned vehicle is further processed by using a method of obtaining an average value of the second position reckoning results, to reduce an error of the positioning result of the to-be-positioned vehicle, and implement global positioning of the to-be-positioned vehicle.

In an optional implementation, the method further includes: obtaining a GPS positioning result and an inertial measurement unit IMU reckoning result; and determining a final positioning result of the to-be-positioned vehicle based on the GPS positioning result and the IMU reckoning result and with reference to the second position reckoning result by using an extended Kalman filter (Extended Kalman Filter, EKF for short).

According to the foregoing method, the EKF performs positioning result fusion on the GPS positioning result, the IMU reckoning result, and the second position reckoning result, so that when an IMU loses a positioning constraint, positioning constraint can be performed on the IMU by using the vehicle information of the surrounding vehicle, thereby improving accuracy of a positioning result and robustness of the positioning system.

According to a second aspect, an embodiment of this application provides a vehicle positioning apparatus, including:
a position covariance obtaining module, configured to obtain a global positioning system GPS position covariance of a to-be-positioned vehicle; a vehicle information obtaining module, configured to: when the GPS position covariance is less than or equal to a preset position covariance threshold, obtain initial position information of the to-be-positioned vehicle and vehicle information of a surrounding vehicle, where the surrounding vehicle is a vehicle whose distance from the to-be-positioned vehicle is less than a preset distance threshold, and the vehicle information includes distance information and vehicle speed information; a first position reckoning module, configured to determine a first position reckoning result of the surrounding vehicle based on the initial position information of the to-be-positioned vehicle and the vehicle information of the surrounding vehicle; and a second position reckoning module, configured to determine a second position reckoning result of the to-be-positioned vehicle based on the first position reckoning result.

It should be understood that the to-be-positioned vehicle may be a vehicle that needs to be positioned because a GPS fails in an environment such as a tunnel, a residential area, or an underground parking lot, or may be a vehicle whose vehicle-mounted sensor is faulty and that cannot be positioned by obtaining surrounding environment information. The faulty vehicle-mounted sensor may be a vehicle-mounted sensor such as a laser radar or an ultrasonic radar. A device for obtaining the vehicle information of the surrounding vehicle may be a device such as a vehicle-mounted camera, a millimeter-wave radar, and a vehicle to everything (vehicle to everything, V2X for short) communications module. A device for determining a position reckoning result may be a vehicle-mounted terminal, or may be a device such as a server or a cloud.

In the foregoing apparatus, when the GPS fails or the vehicle-mounted sensor is faulty and vehicle positioning cannot be performed, the positioning information of the to-be-positioned vehicle may be calculated by obtaining information about the surrounding vehicle, so that a possibility of a safety accident caused by a positioning loss of the vehicle can be effectively reduced, and accuracy of a vehicle positioning result can be improved.

In an optional implementation, the vehicle information of the surrounding vehicle further includes identification information of the surrounding vehicle, orientation information of the surrounding vehicle, and information about an angle difference between the surrounding vehicle and the to-be-positioned vehicle, and the orientation information includes yaw angle information of the surrounding vehicle, pitch angle information of the surrounding vehicle, and roll angle information of the surrounding vehicle; the distance information includes information about a horizontal distance between the surrounding vehicle and the to-be-positioned vehicle, and information about a vertical distance between the surrounding vehicle and the to-be-positioned vehicle; and the vehicle speed information includes the vehicle speed information of the surrounding vehicle and yaw angular velocity information of the surrounding vehicle.

In an optional implementation, the first position reckoning module includes: a vehicle tracking table establishment unit, configured to establish a vehicle tracking table based on the vehicle information of the surrounding vehicle; an initial position calculation unit, configured to obtain initial position information of the surrounding vehicle based on the vehicle tracking table and the initial position information of the to-be-positioned vehicle by using an initial position reckoning algorithm; and a first position reckoning unit, configured to obtain the first position reckoning result based on the initial position information of the surrounding vehicle and the vehicle information of the surrounding vehicle by using a first position reckoning algorithm.

In an optional implementation, the initial position information of the surrounding vehicle includes first initial position coordinates $(x_{i\_t0}, y_{i\_t0}, z_{i\_t0}, yaw_{i\_t0}, pitch_{i\_t0}, roll_{i\_t0})$, the initial position information of the to-be-positioned vehicle includes second initial position coordinates $(x_{t0}, y_{t0}, z_{t0}, yaw_{t0}, pitch_{t0}, roll_{t0})$, and the initial position reckoning algorithm includes:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

and

$$roll_{i\_t0} = roll_{t0},$$

where

$x_{i\text{-}t0}, y_{i\_t0}, z_{i\_t0}, yaw_{i\_t0}, pitch_{i\_t0}$, and $roll_{i\_t0}$ respectively represent coordinate information in a preset x-coordinate axis direction, coordinate information in a preset y-coordinate axis direction, coordinate information in a preset z-coordinate axis direction, yaw angle information, pitch angle information, and roll angle information that are of a surrounding vehicle numbered $i$ and that are at an initial moment $t_0$, $x_{t0}, y_{t0}, z_{t0}, yaw_{t0}, pitch_{t0}$, and $roll_{t0}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the initial moment $t_0$, $lx_{i\_t0}$ and $ly_{i\_t0}$ respectively represent information about a horizontal distance and information about a vertical distance between the surrounding vehicle numbered $i$ and the to-be-positioned vehicle at the initial moment $t_0$, and $lyaw_{i\_t0}$ represents information about an angle difference between the surrounding vehicle numbered $i$ and the to-be-positioned vehicle at the initial moment $t_0$.

In an optional implementation, the first position reckoning result includes first position reckoning coordinates $(x_{i\_t}, y_{i\_t}, z_{i\_t}, yaw_{i\_t}, pitch_{i\text{-}t}, roll_{i\_t})$, and the first position reckoning algorithm includes:

$$yaw_{i\_t} = yaw_{i\_t-\Delta t} + yawrate_{i\_t} * \Delta t;$$

$$pitch_{i\_t} = pitch_{i\_t-\Delta t};$$

$$roll_{i\_t} = roll_{i\_t-\Delta t};$$

$$x_{i\_t} = x_{i\_t-\Delta t} + v_{i\_t} * \cos yaw_{i\_t} * \Delta t;$$

$$y_{i\_t} = y_{i\_t-\Delta t} + v_{i\_t} * \sin yaw_{i\_t} * \Delta t;$$

and

$$z_{i\_t} = z_{i\_t-\Delta t},$$

where

$x_{i\_t}$, $y_{i\_t}$, $z_{i\_t}$, $yaw_{i\_t}$, $pitch_{i\_t}$, and $roll_{i\_t}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the surrounding vehicle numbered $i$ and that are at a moment $t$, $x_{i\_t-\Delta t}$, $y_{i\_t-\Delta t}$, $z_{i\_t-\Delta t}$, $yaw_{i\_t-\Delta t}$, $pitch_{i\_t\_\Delta t}$, and $roll_{i\_t-\Delta t}$ respectively represent coordinate information in the preset x-coordinate axis direction, coordinate information in the preset y-coordinate axis direction, coordinate information in the preset z-coordinate axis direction, roll angle information, pitch angle information, and roll angle information that are of the surrounding vehicle numbered $i$ and that are at the moment $t$-$\Delta t$, $yawrate_{i\_t}$ represents yaw angular velocity information that is of the surrounding vehicle numbered $i$ and that is at the moment $t$, $\Delta t$ is a preset time interval, and $v_{i\_t}$ represents vehicle speed information that is of the surrounding vehicle numbered $i$ and that is at the moment $t$.

According to the foregoing apparatus, the vehicle information of the surrounding vehicle is obtained, and the first position reckoning result of the surrounding vehicle is obtained through reckoning, so that the positioning information of the surrounding vehicle can be obtained through calculation in an environment in which a GPS fails, and the positioning information is used as basic information for calculating a positioning result of the to-be-positioned vehicle, thereby improving robustness of the positioning system.

In an optional implementation, the second position reckoning module includes: an information obtaining unit, configured to obtain the information about the angle difference between the surrounding vehicle and the to-be-positioned vehicle, the information about the horizontal distance between the surrounding vehicle and the to-be-positioned vehicle, and the information about the vertical distance between the surrounding vehicle and the to-be-positioned vehicle; and a second position reckoning unit, configured to obtain the second position reckoning result with reference to the first position reckoning result by using a second position reckoning algorithm.

In an optional implementation, the second position reckoning result includes second position reckoning coordinates ($x_t$, $y_t$, $z_t$, $yaw_t$, $pitch_t$, $roll_t$), and the second position reckoning algorithm includes:

$$x_t = x_{i\_t} - lx_{i\_t};$$

$$y_t = y_{i\_t} - ly_{i\_t};$$

$$z_t = z_{i\_t};$$

$$yaw_t = yaw_{i\_t} - lyaw_{i\_t};$$

$$pitch_t = pitch_{i\_t};$$

and

$$roll_t = roll_{i\_t},$$

where

$x_t$, $y_t$, $z_t$, $yaw_t$, $pitch_t$, and $roll_t$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the moment $t$, $x_{i\_t}$, $y_{i\_t}$, $z_{i\_t}$, $yaw_{i\_t}$, $pitch_{i\_t}$, and $roll_{i\_t}$ respectively represent the coordinate information in the preset x-coordinate axis direction, the coordinate information in the preset y-coordinate axis direction, the coordinate information in the preset z-coordinate axis direction, the yaw angle information, the pitch angle information, and the roll angle information that are of the surrounding vehicle numbered $i$ and that are at the moment $t$, $lx_{i\_t}$ and $ly_{i\_t}$ respectively represent information about a horizontal distance and information about a vertical distance between the surrounding vehicle numbered $i$ and the to-be-positioned vehicle at the moment $t$, and $lyaw_{i\_t}$ represents information about an angle difference between the surrounding vehicle numbered $i$ and the to-be-positioned vehicle at the moment $t$.

According to the foregoing apparatus, the information about the angle difference between the surrounding vehicle and the to-be-positioned vehicle and the information about the distance between the surrounding vehicle and the to-be-positioned vehicle are obtained, and the position reckoning result of the to-be-positioned vehicle is obtained through calculation by using the second position reckoning algorithm. In this way, the positioning information of the to-be-positioned vehicle can be calculated based on the vehicle information of the surrounding vehicle in a vehicle running process, thereby reducing a positioning error of the to-be-positioned vehicle, and implementing global positioning of the to-be-positioned vehicle.

In an optional implementation, the first position reckoning module further includes: a position covariance determining unit, configured to: determine whether the GPS position covariance is greater than the preset position covariance threshold, and if the GPS position covariance is greater than the preset position covariance threshold, perform the step of determining a first position reckoning result of the surrounding vehicle based on the initial position information of the to-be-positioned vehicle and the vehicle information of the surrounding vehicle.

According to the foregoing apparatus, a value relationship between the GPS position covariance and the preset position covariance threshold is determined, and when the GPS position covariance is greater than the preset position covariance threshold, the vehicle positioning method provided in this embodiment of this application is enabled. Therefore, when accuracy of a positioning result is reduced due to a GPS failure or a vehicle-mounted sensor fault, the positioning system can be constrained by using the vehicle information of the surrounding vehicle, thereby effectively preventing a harm caused by a GPS positioning loss, and improving accuracy of a positioning result of the to-be-positioned vehicle.

In an optional implementation, when a quantity N of surrounding vehicles is greater than 1, N vehicles of the surrounding vehicles correspond to N first position reckoning results, and the second position reckoning module includes: a positioning result average value calculation unit, configured to respectively determine, based on the N first position reckoning results, N second position reckoning results corresponding to the to-be-positioned vehicle, calculate a positioning result average value of the N second position reckoning results, and use the positioning result average value as a final second position reckoning result of the to-be-positioned vehicle.

According to the foregoing apparatus, when the quantity of surrounding vehicles is greater than 1, a second position reckoning result of the to-be-positioned vehicle relative to each surrounding vehicle is calculated. The positioning result of the to-be-positioned vehicle is further processed by using a method of obtaining an average value of the second position reckoning results, to reduce an error of the positioning result of the to-be-positioned vehicle, and implement global positioning of the to-be-positioned vehicle.

In an optional implementation, the apparatus further includes: a positioning result obtaining module, configured to obtain a GPS positioning result and an inertial measurement unit IMU reckoning result; and a positioning result fusion module, configured to determine a final positioning result of the to-be-positioned vehicle based on the GPS positioning result and the IMU reckoning result and with reference to the second position reckoning result by using an extended Kalman filter.

According to the foregoing apparatus, the EKF performs positioning result fusion on the GPS positioning result, the IMU reckoning result, and the second position reckoning result, so that when an IMU loses a positioning constraint, positioning constraint can be performed on the IMU by using the vehicle information of the surrounding vehicle, thereby improving accuracy of a positioning result and robustness of the positioning system.

According to a third aspect, an embodiment of this application provides a vehicle positioning apparatus, including a memory and a processor. The memory is configured to store a computer program, and the processor is configured to invoke the computer program to perform the method according to the first aspect or any one of the possible implementations of the first aspect.

According to a fourth aspect, an embodiment of this application provides a computer-readable storage medium. The computer-readable storage medium stores a computer program. The computer program includes program instructions. When the program instructions are executed by a processor, the method according to the first aspect or any one of the possible implementations of the first aspect is performed.

**BRIEF DESCRIPTION OF DRAWINGS**

To describe the technical solutions in embodiments of this application or in the background more clearly, the following briefly describes the accompanying drawings for describing embodiments of this application or the background.

FIG. 1 is a schematic flowchart of a vehicle positioning method according to an embodiment of this application;

FIG. 2 is a schematic diagram of a scenario of a vehicle positioning method according to an embodiment of this application;

FIG. 3 is a schematic flowchart of determining a first position reckoning result according to an embodiment of this application;

FIG. 4 is a schematic flowchart of determining a second position reckoning result according to an embodiment of this application;

FIG. 5 is a schematic flowchart of another vehicle positioning method according to an embodiment of this application;

FIG. 6 is a schematic diagram of composition of a vehicle positioning apparatus according to an embodiment of this application;

FIG. 7 is a schematic diagram of composition of another vehicle positioning apparatus according to an embodiment of this application; and

FIG. 8 is a schematic diagram of composition of a vehicle positioning apparatus according to an embodiment of this application.

## DESCRIPTION OF EMBODIMENTS

The following describes embodiments of this application with reference to the accompanying drawings in embodiments of this application.

A vehicle positioning method provided in the embodiments of this application may be applied to a scenario in which a GPS fails or a vehicle-mounted sensor is faulty, or certainly, may be applied to a scenario in which a GPS or a vehicle-mounted sensor is normal. The following separately uses a scenario 1 and a scenario 2 as examples to describe the vehicle positioning method provided in the embodiments of this application.

Scenario 1:

A vehicle positioning technology provides an important basis for implementing autonomous driving, and is a key technology in the field of autonomous driving technologies. In addition, in a general vehicle navigation system, travel route planning also needs to be implemented based on vehicle positioning. Currently, most vehicle positioning technologies are implemented based on a GPS. However, because a GPS signal is blocked and reflected by a surrounding environment, in a special scenario, for example, a tunnel, a residential area, or an underground parking, a GPS signal is weak, resulting in a problem of a poor vehicle positioning effect.

Scenario 2:

A vehicle positioning technology provides an important basis for implementing autonomous driving, and is a key technology in the field of autonomous driving technologies. In addition, in a general vehicle navigation system, travel route planning also needs to be implemented based on vehicle positioning. Because a GPS has problems such as relatively low update frequency and a tendency to be blocked and reflected, in a complex scenario, and it is difficult to accurately position a vehicle by using only the GPS, a plurality of types of road information may be obtained by using another vehicle-mounted sensor, to position a vehicle. However, in a traveling process of the vehicle, when a vehicle-mounted sensor encounters an unexpected fault, positioning constraint cannot be performed on a positioning result, and accuracy of the positioning result is affected. For example, when a laser radar sensor is faulty, a distance between the vehicle and a surrounding obstacle cannot be measured, and consequently, a positioning result of the vehicle is affected.

In the scenario 1 or the scenario 2, a to-be-positioned vehicle may obtain a global positioning system GPS position covariance of a to-be-positioned vehicle; when the GPS position covariance is less than or equal to a preset position covariance threshold, obtain initial position information of the to-be-positioned vehicle and vehicle information of a surrounding vehicle, where the surrounding vehicle is a vehicle whose distance from the to-be-positioned vehicle is less than a preset distance threshold, and the vehicle information includes distance information and vehicle speed information; determine a first position reckoning result of the surrounding vehicle based on the initial position information of the to-be-positioned vehicle and the vehicle information of the surrounding vehicle; and determine a second position reckoning result of the to-be-positioned vehicle based on the first position reckoning result. A GPS positioning result and an IMU reckoning result are obtained; and positioning fusion is performed by using an EKF based on the GPS positioning result and the IMU reckoning result and with reference to the second position reckoning result, to determine a final positioning result of the to-be-positioned vehicle.

It may be learned that, according to the vehicle positioning method provided in this embodiment of this application, the initial position information of the to-be-positioned vehicle may be obtained when the GPS is normal, and then, when the GPS fails or a signal is poor, and/or a sensor of the to-be-positioned vehicle is faulty, vehicle information of a surrounding vehicle is obtained, and global positioning information of the to-be-positioned vehicle is obtained through calculation with reference to the initial position information of the to-be-positioned vehicle, thereby effectively improving accuracy of a vehicle positioning result and robustness of a vehicle positioning system.

The following describes in detail the methods in embodiments of this application.

It should be noted that, Embodiment 1 and Embodiment 2 below may be applied to the scenario 1 and the scenario 2 above.

**Embodiment 1**

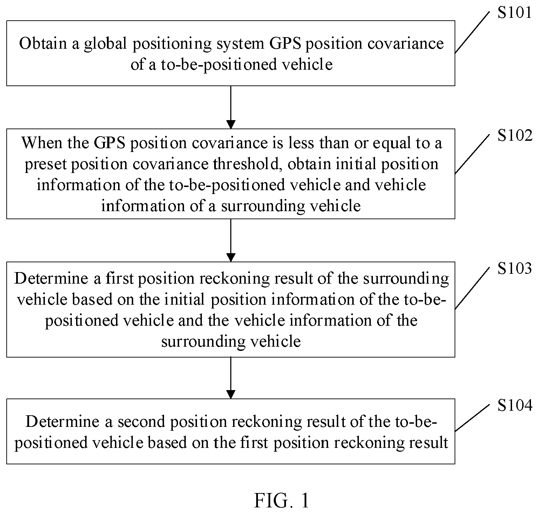

FIG. 1 is a schematic flowchart of a vehicle positioning method according to an embodiment of this application. As shown in FIG. 1, the vehicle positioning method includes the following steps.

S101: Obtain a global positioning system GPS position covariance of a to-be-positioned vehicle.

The to-be-positioned vehicle may be a vehicle that needs to be positioned because a GPS fails in an environment such as a tunnel, a residential area, or an underground parking lot, or may be a vehicle whose vehicle-mounted sensor is faulty and that cannot be positioned by obtaining surrounding environment information. The faulty vehicle-mounted sensor may be a vehicle-mounted sensor such as a laser radar or an ultrasonic radar.

It should be understood that the GPS position covariance may be used to indicate accuracy of a positioning result output by the vehicle positioning system. A smaller GPS position covariance indicates higher accuracy of the positioning result. Otherwise, a larger GPS position covariance indicates lower accuracy of the positioning result output by the vehicle positioning system.

S102: When the GPS position covariance is less than or equal to a preset position covariance threshold, obtain initial position information of the to-be-positioned vehicle and vehicle information of a surrounding vehicle.

It should be understood that a device for obtaining the initial position information of the to-be-positioned vehicle may be a device such as a vehicle-mounted GPS receiver and an inertial measurement unit IMU sensor. A device for obtaining the vehicle information of the surrounding vehicle may be a device such as a vehicle-mounted camera, a millimeter-wave radar, or a V2X broadcast communicator. The vehicle-mounted camera may be a monocular camera, a binocular camera, a trinocular camera, a 360-degree view camera, or the like. This is not limited in this embodiment of this application.

The surrounding vehicle is a vehicle whose distance from the to-be-positioned vehicle is less than a preset distance threshold, and the vehicle information includes distance information and vehicle speed information. The preset distance threshold may be used to indicate a maximum distance between the surrounding vehicle and the to-be-positioned vehicle. When the distance between the surrounding vehicle and the to-be-positioned vehicle is less than the preset distance threshold, the to-be-positioned vehicle may obtain the vehicle information of the surrounding vehicle by using a device such as a V2X broadcast communicator.

The vehicle information of the surrounding vehicle further includes identification information of the surrounding vehicle, orientation information of the surrounding vehicle, and information about an angle difference between the surrounding vehicle and the to-be-positioned vehicle, and the orientation information includes yaw angle information of the surrounding vehicle, pitch angle information of the surrounding vehicle, and roll angle information of the surrounding vehicle in a world coordinate system; the distance information includes information about a horizontal distance between the surrounding vehicle and the to-be-positioned vehicle, and information about a vertical distance between the surrounding vehicle and the to-be-positioned vehicle; and the vehicle speed information includes the vehicle speed information of the surrounding vehicle and yaw angular velocity information of the surrounding vehicle. It should be understood that the identification information of the surrounding vehicle may be information that uniquely identifies a vehicle, such as a license plate number. This is not limited in this embodiment of this application.

S103: Determine a first position reckoning result of the surrounding vehicle based on the initial position information of the to-be-positioned vehicle and the vehicle information of the surrounding vehicle.

A device for determining the first position reckoning result may be a vehicle-mounted terminal, or may be a device such as a server or a cloud. This is not limited in this embodiment of this application.

Before step S103, the method provided in this embodiment of this application may further include: determining whether the GPS position covariance is greater than the preset position covariance threshold, and if the GPS position covariance is greater than the preset position covariance threshold, performing the determining a first position reckoning result of the surrounding vehicle based on the initial position information of the to-be-positioned vehicle and the vehicle information of the surrounding vehicle.

It should be understood that, when the GPS position covariance is greater than the preset position covariance threshold, it indicates that the positioning result output by the vehicle positioning system is inconsistent with an actual vehicle position in this case, and step S103 starts to be performed.

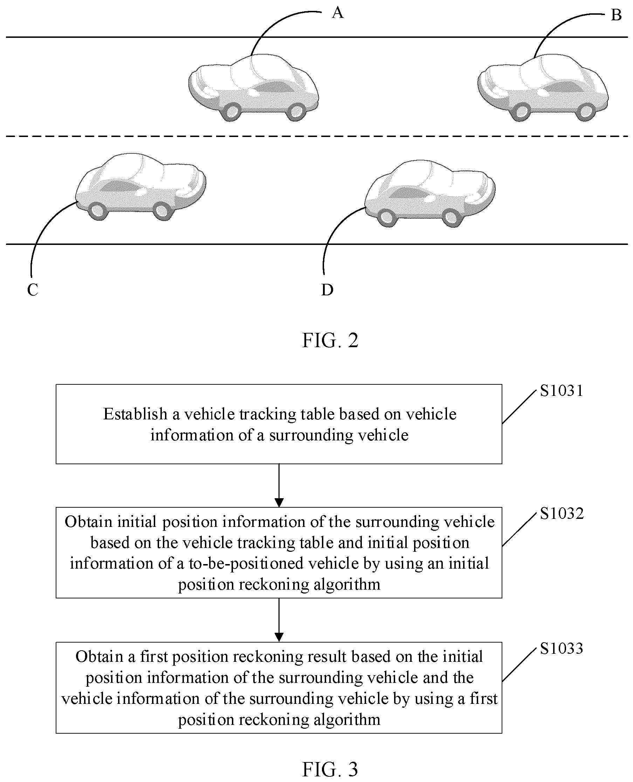

FIG. 2 is a schematic diagram of a scenario of a vehicle positioning method according to an embodiment of this application. As shown in FIG. 2, four vehicles travel on a lane in total. The four vehicles all have unique identification information, which are A, B, C, and D respectively. A vehicle A is a to-be-positioned vehicle, and a distance between the vehicle A and each of the vehicle B, the vehicle C, and the vehicle D is less than the preset distance threshold. In addition, a V2X broadcast communicator is disposed on each of the four vehicles, and a vehicle-mounted camera, a millimeter-wave radar sensor, a vehicle-mounted GPS receiver, and an inertial measurement unit IMU are further disposed on the vehicle A. In the scenario 1, due to blocking by a building or the like, GPS positioning of A, B, C, and D is temporarily lost. In this case, before the GPS positioning is lost, the vehicle A obtains initial position information of the vehicle A and vehicle information of the surrounding vehicles B, C, and D in step S102. When it is detected that a GPS position covariance is greater than the preset position covariance threshold, in other words, after the GPS positioning is lost, step S103 is performed. In the scenario 2, because a sensor of the vehicle A is faulty, positioning of the vehicle A is affected. In this case, the vehicle A may obtain initial position information of the vehicle A and vehicle information of the surrounding vehicles B, C, and D in step S102. When it is detected that a GPS position covariance is greater than the preset position covariance threshold, in other words, the vehicle-mounted sensor is faulty, after positioning is affected, step S103 starts to be performed.

Specifically, FIG. 3 is a schematic flowchart of determining a first position reckoning result according to an embodiment of this application. As shown in FIG. 3, step S103 includes the following steps.

S1031: Establish a vehicle tracking table based on the vehicle information of the surrounding vehicle.

The vehicle tracking table may include the identification information of the surrounding vehicle, an obtaining time of the vehicle information, the initial position information, the vehicle speed information, the orientation information, information about a distance between the surrounding vehicle and the to-be-positioned vehicle, and the first position reckoning result.

It should be understood that the identification information of the surrounding vehicle may be obtained by using the vehicle-mounted camera of the to-be-positioned vehicle, and the vehicle speed information and the orientation information of the surrounding vehicle may be obtained by using the V2X broadcast communicator of the to-be-positioned vehicle. The information about the distance between the surrounding vehicle and the to-be-positioned vehicle specifically includes information about a horizontal distance and information about a vertical distance, and may be obtained by using the millimeter-wave radar, the V2X broadcast communicator, and the vehicle-mounted camera of the to-be-positioned vehicle. Image data captured by the vehicle-mounted camera may be used to determine a position relationship between the surrounding vehicle and the to-be-positioned vehicle, for example, front, rear, left, or right. Initial position information of the surrounding vehicle and the first position reckoning result may be calculated by using a device such as a vehicle-mounted terminal, a server, or a cloud of the to-be-positioned vehicle. This is not limited in this embodiment of this application.

S1032: Obtain the initial position information of the surrounding vehicle based on the vehicle tracking table and the initial position information of the to-be-positioned vehicle by using an initial position reckoning algorithm.

In an optional implementation, the initial position information of the surrounding vehicle may be first initial position coordinates $(x_{i\_t0}, y_{i\_t0}, z_{i\_t0}, yaw_{i\_t0}, pitch_{i\_t0}, roll_{i\_t0})$, the initial position information of the to-be-positioned vehicle may be second initial position coordinates $(x_{t0}, y_{t0}, z_{t0}, yaw_{t0}, pitch_{t0}, roll_{t0})$, and the initial position reckoning algorithm is:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

and

$$roll_{i\_t0} = roll_{t0},$$

where

$x_{i\_t0}$, $y_{i\_t0}$, $z_{i\_t0}$, $yaw_{i\_t0}$, $pitch_{i\_t0}$, and $roll_{i\_t0}$ respectively represent coordinate information in a preset x-coordinate axis direction, coordinate information in a preset y-coordinate axis direction, coordinate information in a preset z-coordinate axis direction, yaw angle information, pitch angle information, and roll angle information that are of a surrounding vehicle numbered $i$ and that are at an initial moment $t_0$, $x_{t0}$, $y_{t0}$, $z_{t0}$, $yaw_{t0}$, $pitch_{t0}$, and $roll_{t0}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the initial moment $t_0$, $lx_{i\_t0}$ and $ly_{i\_t0}$ respectively represent information about a horizontal distance and information about a vertical distance between the surrounding vehicle numbered i and the to-be-positioned vehicle at the initial moment $t_0$, and $lyaw_{i\_t0}$ represents information about an angle difference between the surrounding vehicle numbered $i$ and the to-be-positioned vehicle at the initial moment $t_0$.

Specifically, $x$, $y$, and $z$ may be three-dimensional rectangular coordinates in the world coordinate system. A geodetic rectangular coordinate system in which the rectangular coordinates are located may use a specific position as a fixed origin, for example, a position in which the to-be-positioned vehicle starts to perform step S103; and uses a due north direction as an x-coordinate axis direction, uses a due east direction as a y-coordinate axis direction, and uses a vertical upward direction as a z-coordinate axis direction. Alternatively, $x$, $y$, and $z$ may represent a latitude, a longitude, and an altitude of a position of the vehicle. $yaw$ is an angle at which a vehicle head of the vehicle rotates around a z-coordinate axis, $pitch$ is used to represent an included angle between the vehicle head of the vehicle and a geodetic horizontal plane, namely, an angle at which the vehicle rotates around a y-coordinate axis, and $roll$ is an angle at which the vehicle rotates around an x-coordinate axis.

S1033: Obtain the first position reckoning result based on the initial position information of the surrounding vehicle and the vehicle information of the surrounding vehicle by using a first position reckoning algorithm.

In an optional implementation, the first position reckoning result includes first position reckoning coordinates ($x_{i\_t}$, $y_{i\_t}$, $z_{i\_t}$, $yaw_{i\_t}$, $pitch_{i\_t}$, $roll_{i\_t}$), and the first position reckoning algorithm includes:

$$yaw_{i\_t} = yaw_{i\_t-\Delta t} + yawrate_{i\_t} * \Delta t;$$

$$pitch_{i\_t} = pitch_{i\_t-\Delta t};$$

$$roll_{i\_t} = roll_{i\_t-\Delta t};$$

$$x_{i\_t} = x_{i\_t-\Delta t} + v_{i\_t} * \cos yaw_{i\_t} * \Delta t;$$

$$y_{i\_t} = y_{i\_t-\Delta t} + v_{i\_t} * \sin yaw_{i\_t} * \Delta t;$$

and

$$z_{i\_t} = z_{i\_t-\Delta t},$$

where

$x_{i\_t}$, $y_{i\_t}$, $z_{i\_t}$, $yaw_{i\_t}$, $pitch_{i\_t}$, and $roll_{i\_t}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the surrounding vehicle numbered $i$ and that are at a moment $t$, $x_{i\_t-\Delta t}$, $y_{i\_t-\Delta t}$, $z_{i\_t-\Delta t}$, $yaw_{i\_t-\Delta t}$, $pitch_{i\_t-\Delta t}$, and $roll_{i\_t-\Delta t}$ respectively represent coordinate information in the preset x-coordinate axis direction, coordinate information in the preset y-coordinate axis direction, coordinate information in the preset z-coordinate axis direction, roll angle information, pitch angle information, and roll angle information that are of the surrounding vehicle numbered $i$ and that are at the moment $t - \Delta t$, $yawrate_{i\_t}$ represents yaw angular velocity information that is of the surrounding vehicle numbered $i$ and that is at the moment $t$, $\Delta t$ is a preset time interval, and $v_{i\_t}$ represents vehicle speed information that is of the surrounding vehicle numbered $i$ and that is at the moment $t$.

It should be understood that the yaw angular velocity information and the vehicle speed information of the surrounding vehicle may be obtained by using the V2X broadcast communicator.

In steps S1031 to S1033, on the basis of obtaining the initial position information of the to-be-positioned vehicle, the first position reckoning result of the surrounding vehicle may be obtained through calculation by using the vehicle information of the surrounding vehicle and with reference to the initial position reckoning algorithm and the first position reckoning algorithm, and the first position reckoning result is used as basic information for calculating a positioning result of the to-be-positioned vehicle, so as to resolve a problem that vehicle positioning cannot be performed when a GPS of the surrounding vehicle is lost, thereby improving robustness of the positioning system.

S104: Determine a second position reckoning result of the to-be-positioned vehicle based on the first position reckoning result.

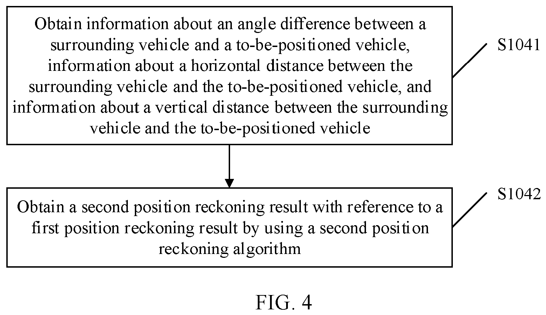

Specifically, FIG. 4 is a schematic flowchart of determining a second position reckoning result according to an embodiment of this application. As shown in FIG. 4, step S104 includes the following steps.

S1041: Obtain the information about the angle difference between the surrounding vehicle and the to-be-positioned vehicle, the information about the horizontal distance between the surrounding vehicle and the to-be-positioned vehicle, and the information about the vertical distance between the surrounding vehicle and the to-be-positioned vehicle.

It should be understood that the information about the angle difference between the surrounding vehicle and the to-be-positioned vehicle may be obtained by using the millimeter-wave radar of the to-be-positioned vehicle. The information about the horizontal distance between the surrounding vehicle and the to-be-positioned vehicle, and the information about the vertical distance between the surrounding vehicle and the to-be-positioned vehicle may be obtained by using the millimeter-wave radar and the vehicle-mounted camera of the to-be-positioned vehicle. The millimeter-wave radar is configured to measure a distance between the surrounding vehicle and the to-be-positioned vehicle, and the vehicle-mounted camera is configured to capture a position relationship between the surrounding vehicle and the to-be-positioned vehicle.

S1042: Obtain the second position reckoning result with reference to the first position reckoning result by using a second position reckoning algorithm.

In an optional implementation, the second position reckoning result includes second position reckoning coordinates $(x_t, y_t, z_t, yaw_t, pitch_t, roll_t)$, and the second position reckoning algorithm includes:

$$x_t = x_{i\_t} - lx_{i\_t};$$

$$y_t = y_{i\_t} - ly_{i\_t};$$

$$z_t = z_{i\_t};$$

$$yaw_t = yaw_{i\_t} - lyaw_{i\_t};$$

$$pitch_t = pitch_{i\_t};$$

and

$$roll_t = roll_{i\_t},$$

where

$x_t, y_t, z_t, yaw_t, pitch_t,$ and $roll_t$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the moment $t$, $x_{i\_t}, y_{i\_t}, z_{i\_t}, yaw_{i\_t}, pitch_{i\_t},$ and $roll_{i\_t}$ respectively represent the coordinate information in the preset x-coordinate axis direction, the coordinate information in the preset y-coordinate axis direction, the coordinate information in the preset z-coordinate axis direction, the yaw angle information, the pitch angle information, and the roll angle information that are of the surrounding vehicle numbered $i$ and that are at the moment $t$, $lx_{i\_t}$ and $ly_{i\_t}$ respectively represent information about a horizontal distance and information about a vertical distance between the surrounding vehicle numbered i and the to-be-positioned vehicle at the moment $t$, and $lyaw_{i\_t}$ represents information about an angle difference between the surrounding vehicle numbered $i$ and the to-be-positioned vehicle at the moment $t$.

It should be understood that, in an optional implementation, when the vehicle is in an uphill or downhill road section, an updated value of $z$ and the pitch angle information of the vehicle may be obtained through a high-precision map. This is not limited in this embodiment of this application.

It should be understood that, in step S103, the first position reckoning result of the surrounding vehicle is determined by using the first position reckoning algorithm. Based on the first position reckoning result, with reference to the distance and the position relationship between the surrounding vehicle and the to-be-positioned vehicle, and the information about the angle difference between the surrounding vehicle and the to-be-positioned vehicle, the position of the to-be-positioned vehicle, namely, the second position reckoning result, may be deduced by using the second position reckoning algorithm. The position relationship between the surrounding vehicle and the to-be-positioned vehicle may determine positive and negative values of $Ix_{i\_t}$ and $Iy_{i\_t}$. For example, in the x-coordinate axis direction, when the surrounding vehicle is in a positive direction of the to-be-positioned vehicle, $Ix_{i\_t}$ is a positive number; otherwise, when the surrounding vehicle is in a negative direction of the to-be-positioned vehicle, $Ix_{i\_t}$ is a negative number; and in the y-coordinate axis direction, when the surrounding vehicle is in a positive direction of the to-be-positioned vehicle, $Iy_{i\_t}$ is a positive number; otherwise, when the surrounding vehicle is in a negative direction of the to-be-positioned vehicle, $Iy_{i\_t}$ is a negative number.

Further, when a quantity N of surrounding vehicles is greater than 1, N vehicles of the surrounding vehicles correspond to N first position reckoning results. After step S1042, the method includes: respectively determining, based on the N first position reckoning results, N second position reckoning results corresponding to the to-be-positioned vehicle, calculating a positioning result average value of the N second position reckoning results, and using the positioning result average value as a final second position reckoning result of the to-be-positioned vehicle.

**Embodiment 2**

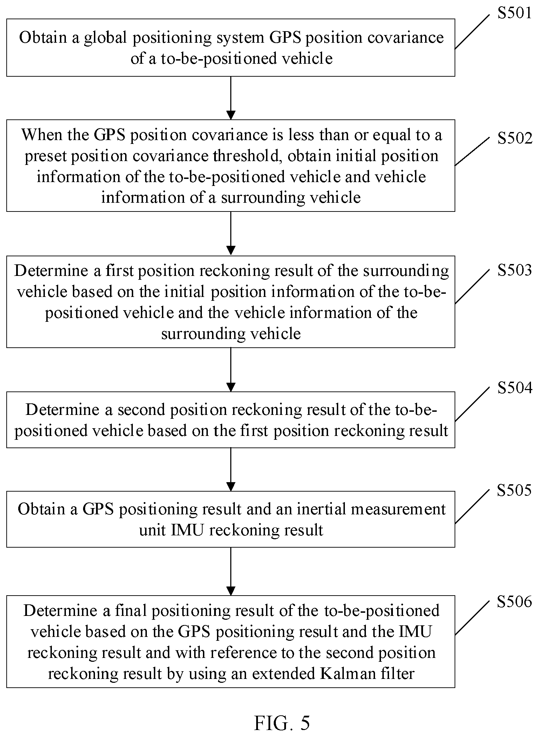

FIG. 5 is a schematic flowchart of another vehicle positioning method according to an embodiment of this application. As shown in FIG. 5, compared with Embodiment 1, steps S501 to S504 are the same as steps S101 to S104 in Embodiment 1. After step S504, the method in Embodiment 2 further includes the following steps:

S505: Obtain a GPS positioning result and an inertial measurement unit IMU reckoning result.
S506: Determine a final positioning result of the to-be-positioned vehicle based on the GPS positioning result and the IMU reckoning result and with reference to the second position reckoning result by using an extended Kalman filter.

It should be understood that the second position reckoning result obtained through calculation according to the method in Embodiment 1 may be used as a positioning result of the to-be-positioned vehicle, or may be used as a positioning constraint of an IMU. The GPS positioning result, the IMU reckoning result, and the second position reckoning result are fused by using the extended Kalman filter EKF, to obtain the final positioning result of the to-be-positioned vehicle.

In an optional implementation, after vehicle positioning information is initialized, the EKF starts to perform iteration of positioning information prediction and positioning information observation, and finally obtains the final positioning result of the to-be-positioned vehicle. The positioning information observation may be used to perform weighted correction on a result of the positioning information prediction, to achieve accuracy of the positioning result.

The following describes apparatuses in embodiments of this application with reference to accompanying drawings.

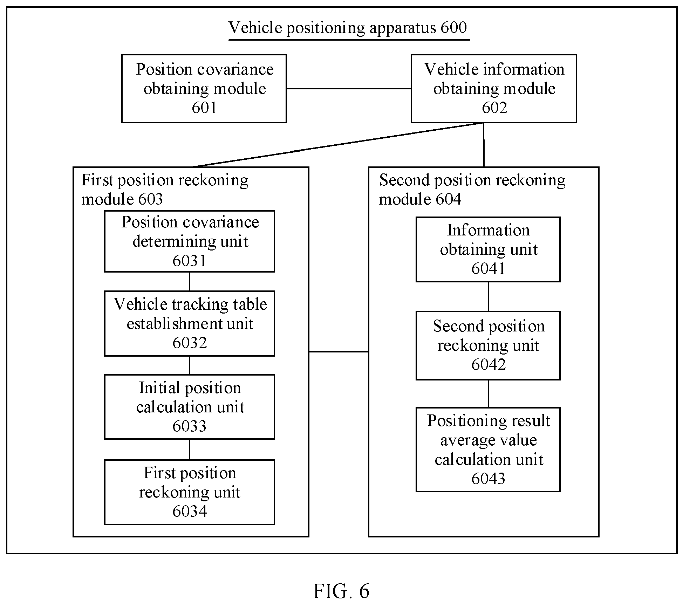

FIG. 6 is a schematic diagram of composition of a vehicle positioning apparatus according to an embodiment of this application. As shown in FIG. 6, a vehicle positioning apparatus 600 provided in this embodiment of this application may include:

a position covariance obtaining module 601, configured to obtain a global positioning system GPS position covariance of a to-be-positioned vehicle;
a vehicle information obtaining module 602, configured to: when the GPS position covariance is less than or equal to a preset position covariance threshold, obtain initial position information of the to-be-positioned vehicle and vehicle information of a surrounding vehicle, where the surrounding vehicle is a vehicle whose distance from the to-be-positioned vehicle is less than a preset distance threshold, and the vehicle information includes distance information and vehicle speed information;
a first position reckoning module 603, configured to determine a first position reckoning result of the surrounding vehicle based on the initial position information of the to-be-positioned vehicle and the vehicle information of the surrounding vehicle; and
a second position reckoning module 604, configured to determine a second position reckoning result of the to-be-positioned vehicle based on the first position reckoning result.

For a specific function implementation of the position covariance obtaining module 601 and the vehicle information obtaining module 602, refer to steps S101 and S102 in Embodiment 1 corresponding to FIG. 1. Details are not described herein again.

Further, the first position reckoning module 603 includes:

a position covariance determining unit 6031, configured to: determine whether the GPS position covariance is greater than the preset position covariance threshold, and if the GPS position covariance is greater than the preset position covariance threshold, perform step S103 in Embodiment 1;

a vehicle tracking table establishment unit 6032, configured to establish a vehicle tracking table based on the vehicle information of the surrounding vehicle;

an initial position calculation unit 6033, configured to obtain initial position information of the surrounding vehicle based on the vehicle tracking table and the initial position information of the to-be-positioned vehicle by using an initial position reckoning algorithm; and

a first position reckoning unit 6034, configured to obtain the first position reckoning result based on the initial position information of the surrounding vehicle and the vehicle information of the surrounding vehicle by using a first position reckoning algorithm.

For a specific function implementation of the first position reckoning module 603, refer to step S103 in Embodiment 1 corresponding to FIG. 1. Details are not described herein again.

Further, the second position reckoning module 604 includes:

an information obtaining unit 6041, configured to obtain the information about the angle difference between the surrounding vehicle and the to-be-positioned vehicle, the information about the horizontal distance between the surrounding vehicle and the to-be-positioned vehicle, and the information about the vertical distance between the surrounding vehicle and the to-be-positioned vehicle;

a second position reckoning unit 6042, configured to obtain the second position reckoning result with reference to the first position reckoning result by using a second position reckoning algorithm; and

a positioning result average value calculation unit 6043, configured to respectively determine, based on the N first position reckoning results, N second position reckoning results corresponding to the to-be-positioned vehicle, calculate a positioning result average value of the N second position reckoning results, and use the positioning result average value as a final second position reckoning result of the to-be-positioned vehicle.

For a specific function implementation of the second position reckoning module 604, refer to step S104 in Embodiment 1 corresponding to FIG. 1. Details are not described herein again.

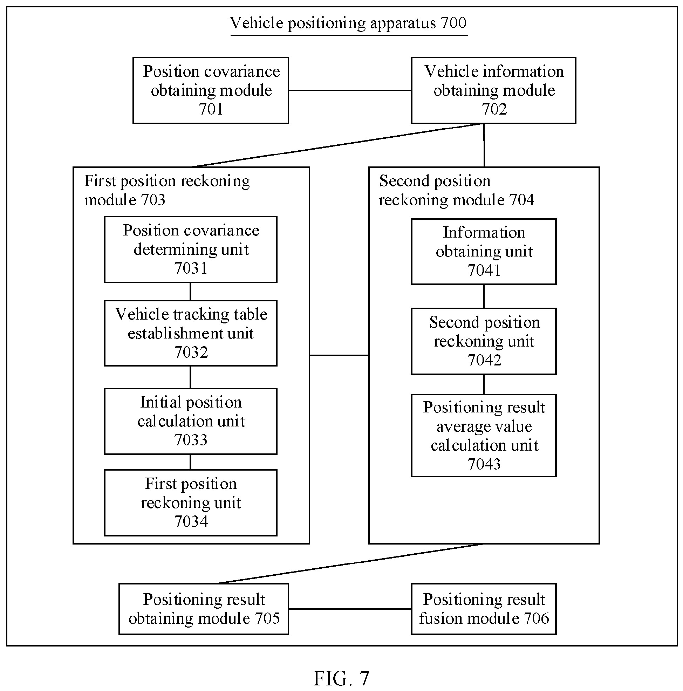

FIG. 7 is a schematic diagram of composition of another vehicle positioning apparatus according to an embodiment of this application. As shown in FIG. 7, compared with the apparatus 600, modules 701 to 704 are the same as the modules 601 to 604 in the apparatus 600. In addition, the apparatus 700 may further include:

a positioning result obtaining module 705, configured to obtain a GPS positioning result and an inertial measurement unit IMU reckoning result; and

a positioning result fusion module 706, configured to determine a final positioning result of the to-be-positioned vehicle based on the GPS positioning result and the IMU reckoning result and with reference to the second position reckoning result by using an extended Kalman filter.

For specific function implementations of the positioning result obtaining module 705 and the positioning result fusion module 706, refer to steps S505 and S506 in Embodiment 2 corresponding to FIG. 5. Details are not described herein again.

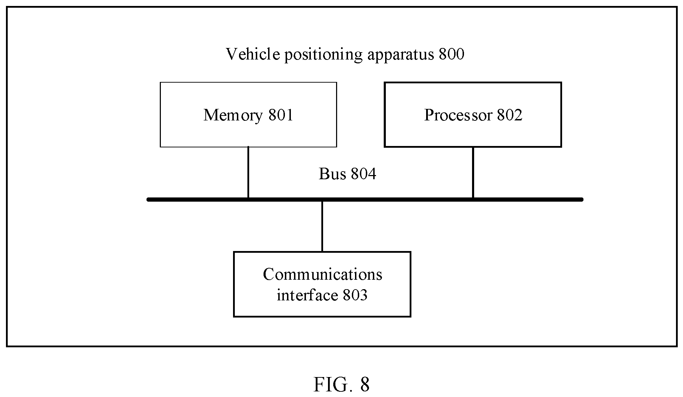

FIG. 8 is a schematic diagram of composition of a vehicle positioning apparatus according to an embodiment of this application. A vehicle positioning apparatus 800 (where the apparatus 800 may be specifically a computer device) shown in FIG. 8 includes a memory 801, a processor 802, a communications interface 803, and a bus 804. The memory 801, the processor 802, and the communications interface 803 implement communication connection between each other through the bus 804.

The memory 801 may be a read-only memory (Read Only Memory, ROM), a static storage device, a dynamic storage device, or a random access memory (Random Access Memory, RAM). The memory 801 may store a program. When the program stored in the memory 801 is executed by the processor 802, the processor 802 and the communications interface 803 are configured to perform the steps of the vehicle positioning method provided in the embodiments of this application.

The processor 802 may be a general-purpose central processing unit (Central Processing Unit, CPU), a microprocessor, an application-specific integrated circuit (Application Specific Integrated Circuit, ASIC), a graphics processing unit (graphics processing unit, GPU), or one or more integrated circuits, and is configured to execute a related program, to implement a function that needs to be performed by a unit in the vehicle positioning apparatus in this embodiment of this application, or perform the vehicle positioning method in the method embodiments of this application.

The processor 802 may be an integrated circuit chip and has a signal processing capability. In an implementation process, steps of the vehicle positioning method in this application can be implemented by using a hardware integrated logical circuit in the processor 802, or by using instructions in a form of software. The processor 802 may alternatively be a general-purpose processor, a digital signal processor (Digital Signal Processing, DSP), an application-specific integrated circuit (ASIC), a field programmable gate array (Field Programmable Gate Array, FPGA) or another programmable logical device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor 802, functions that need to be performed by the units included in the vehicle positioning apparatus in the embodiments of this application, or performs the vehicle positioning method in the method embodiments of this application.

The communications interface 803 uses, for example but not limited to, a transceiver apparatus of a transceiver type, to implement communication between the apparatus 800 and another device or a communications network.

The bus 804 may include a channel on which information is transmitted between the components (for example, the memory 801, the processor 802, and the communications interface 803) of the apparatus 800.

For specific implementation of the functional components, refer to related descriptions in the foregoing embodiments. Details are not described again in this embodiment of this application.

In another form of this embodiment, a computer-readable storage medium is provided. The computer-readable storage medium stores instructions. When the instructions are executed, the methods in the foregoing method embodiments are performed.

A person skilled in the art may understand that, for ease of description, FIG. 8 shows only one memory and one processor. An actual controller may include a plurality of processors and a plurality of memories. The memory may also be referred to as a storage medium, a storage device, or the like. This is not limited in embodiments of this application.

It should be understood that, the processor in this embodiment of this application may be a central processing unit (Central Processing Unit, CPU), or the processor may further be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA), or another programmable logical device, a discrete gate or transistor logical device, a discrete hardware component, or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM for short), a programmable read-only memory (Programmable ROM, PROM for short), an erasable programmable read-only memory (Erasable PROM, EPROM for short), an electrically erasable programmable read-only memory (Electrically EPROM, EEPROM for short), or a flash memory. The volatile memory may be a random access memory (Random Access Memory, RAM for short) and is used as an external cache. For example but not for limitative description, many forms of RAMs may be used, for example, a static random access memory (Static RAM, SRAM for short), a dynamic random access memory (Dynamic RAM, DRAM for short), a synchronous dynamic random access memory (Synchronous DRAM, SDRAM for short), a double data rate synchronous dynamic random access memory (Double Data Rate SDRAM, DDR SDRAM for short), an enhanced synchronous dynamic random access memory (Enhanced SDRAM, ESDRAM for short), a synchlink dynamic random access memory (Synchlink DRAM, SLDRAM for short), and a direct rambus random access memory (Direct Rambus RAM, DR RAM for short).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

In addition to a data bus, the bus may further include a power bus, a control bus, a status signal bus, and the like. However, for clear description, various types of buses in the figures are marked as the bus.

It should be further understood that "first", "second", "third", "fourth", and various numbers in this specification are merely used for differentiation for ease of description, and are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

In an implementation process, steps of the foregoing methods can be implemented by using a hardware integrated logical circuit in the processor, or by using instructions in a form of software. The steps of the methods disclosed with reference to embodiments of this application may be directly performed by a hardware processor, or may be performed by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

Sequence numbers of the foregoing processes do not mean execution sequences in embodiments of this application. The execution sequences of the processes should be determined based on functions and internal logic of the processes, and should not be constructed as any limitation on the implementation processes of embodiments of this application.

A person of ordinary skill in the art may be aware that, various illustrative logical blocks (illustrative logical block, ILB) and steps that are described with reference to the embodiments disclosed in this specification may be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed method and apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk), or the like.

The foregoing descriptions are merely specific implementations of this application, but are not intended to limit the protection scope of this application.

**Claims**

1. A vehicle positioning method, comprising:

   obtaining a global positioning system, GPS, position covariance of a to-be-positioned vehicle;
   when the GPS position covariance is less than or equal to a preset position covariance threshold, obtaining initial position information of the to-be-positioned vehicle and vehicle information of a surrounding vehicle, wherein the surrounding vehicle is a vehicle whose distance from the to-be-positioned vehicle is less than a preset distance threshold, and the vehicle information comprises distance information and vehicle speed information;
   determining a first position reckoning result of the surrounding vehicle based on the initial position information of the to-be-positioned vehicle and the vehicle information of the surrounding vehicle; and
   determining a second position reckoning result of the to-be-positioned vehicle based on the first position reckoning result.

2. The method according to claim 1, wherein the vehicle information of the surrounding vehicle further comprises identification information of the surrounding vehicle, orientation information of the surrounding vehicle, and information about an angle difference between the surrounding vehicle and the to-be-positioned vehicle, and the orientation information comprises yaw angle information of the surrounding vehicle, pitch angle information of the surrounding vehicle, and roll angle information of the surrounding vehicle;

> the distance information comprises information about a horizontal distance between the surrounding vehicle and the to-be-positioned vehicle, and information about a vertical distance between the surrounding vehicle and the to-be-positioned vehicle; and
> the vehicle speed information comprises the vehicle speed information of the surrounding vehicle and yaw angular velocity information of the surrounding vehicle.

3. The method according to claim 2, wherein the determining a first position reckoning result of the surrounding vehicle based on the initial position information of the to-be-positioned vehicle and the vehicle information of the surrounding vehicle comprises:

> establishing a vehicle tracking table based on the vehicle information of the surrounding vehicle;
> obtaining initial position information of the surrounding vehicle based on the vehicle tracking table and the initial position information of the to-be-positioned vehicle by using an initial position reckoning algorithm; and
> obtaining the first position reckoning result based on the initial position information of the surrounding vehicle and the vehicle information of the surrounding vehicle by using a first position reckoning algorithm.

4. The method according to claim 3, wherein the initial position information of the surrounding vehicle comprises first initial position coordinates ($x_{i\_t0}$, $y_{i\_t0}$, $z_{i\_t0}$, $yaw_{i\_t0}$, $pitch_{i\_t0}$, $roll_{i\_t0}$), the initial position information of the to-be-positioned vehicle comprises second initial position coordinates ($x_{t0}$, $y_{t0}$, $z_{t0}$, $yaw_{t0}$, $pitch_{t0}$, $roll_{t0}$), and the initial position reckoning algorithm comprises:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

and

$$roll_{i\_t0} = roll_{t0},$$

wherein

$x_{i\_t0}$, $y_{i\_t0}$, $z_{i\_t0}$, $yaw_{i\_t0}$, $pitch_{i\_t0}$, and $roll_{i\_t0}$ respectively represent coordinate information in a preset x-coordinate axis direction, coordinate information in a preset y-coordinate axis direction, coordinate information in a preset z-coordinate axis direction, yaw angle information, pitch angle information, and roll angle information that are of a surrounding vehicle numbered *i* and that are at an initial moment $t_0$, $x_{t0}$, $y_{t0}$, $z_{t0}$, $yaw_{t0}$, $pitch_{t0}$, and $roll_{t0}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the initial moment $t_0$, $lx_{t\_t0}$ and $ly_{i\_t0}$ respectively represent information about a horizontal distance and information about a vertical distance between the surrounding vehicle numbered i and the to-be-positioned vehicle at the initial moment $t_0$, and $lyaw_{i\_t0}$ represents information about an angle difference between the surrounding vehicle numbered i and the to-be-positioned vehicle at the initial moment $t_0$.

5. The method according to claim 3 or 4, wherein the first position reckoning result comprises first position reckoning coordinates ($x_{i\_t}$, $y_{i\_t}$, $z_{i\_t}$, $yaw_{i\_t}$, $pitch_{i\_t}$, $roll_{i\_t}$), and the first position reckoning algorithm comprises:

$$yaw_{i\_t} = yaw_{i\_t-\Delta t} + yawrate_{i\_t} * \Delta t;$$

$$pitch_{i\_t} = pitch_{i\_t-\Delta t};$$

$$roll_{i\_t} = roll_{i\_t-\Delta t};$$

$$x_{i\_t} = x_{i\_t-\Delta t} + v_{i\_t} * \cos yaw_{i\_t} * \Delta t;$$

$$y_{i\_t} = y_{i\_t-\Delta t} + v_{i\_t} * \sin yaw_{i\_t} * \Delta t;$$

and

$$z_{i\_t} = z_{i\_t-\Delta t},$$

wherein

$x_{i\_t}$, $y_{i\_t}$, $z_{i\_t}$, $yaw_{i\_t}$, $pitch_{i\_t}$, and $roll_{i\_t}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the surrounding vehicle numbered $i$ and that are at a moment $t$, $x_{i\_t-\Delta t}$, $y_{i\_t-\Delta t}$, $z_{i\_t-\Delta t}$, $yaw_{i\_t-\Delta t}$, $pitch_{i\_t-\Delta t}$, and $roll_{i\_t-\Delta t}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the surrounding vehicle numbered $i$ and that are at the moment $t - \Delta t$, $yawrate_{i\_t}$ represents yaw angular velocity information that is of the surrounding vehicle numbered $i$ and that is at the moment $t$, $\Delta t$ is a preset time interval, and $v_{i\_t}$ represents vehicle speed information that is of the surrounding vehicle numbered $i$ and that is at the moment $t$.

6. The method according to any one of claims 1 to 5, wherein the determining a second position reckoning result of the to-be-positioned vehicle based on the first position reckoning result comprises:

   obtaining the information about the angle difference between the surrounding vehicle and the to-be-positioned vehicle, the information about the horizontal distance between the surrounding vehicle and the to-be-positioned vehicle, and the information about the vertical distance between the surrounding vehicle and the to-be-positioned vehicle; and
   obtaining the second position reckoning result with reference to the first position reckoning result by using a second position reckoning algorithm.

7. The method according to claim 6, wherein the second position reckoning result comprises second position reckoning coordinates ($x_t$, $y_t$, $z_t$, $yaw_t$, $pitch_t$, $roll_t$), and the second position reckoning algorithm comprises:

$$x_t = x_{i\_t} - lx_{i\_t};$$

$$y_t = y_{i\_t} - ly_{i\_t};$$

$$z_t = z_{i\_t};$$

$$yaw_t = yaw_{i\_t} - lyaw_{i\_t};$$

$$pitch_t = pitch_{i\_t};$$

and

$$roll_t = roll_{i\_t},$$

wherein

$xt$, $y_t$, $z_t$, $yaw_t$, $pitch_t$, and $roll_t$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the moment $t$, $x_{i\_t}$, $y_{i\_t}$, $z_{i\_t}$, $yaw_{i\_t}$, $pitch_{i\_t}$, and $roll_{i\_t}$ respectively represent the coordinate information in the preset x-coordinate axis direction, the coordinate information in the preset y-coordinate axis direction, the coordinate information in the preset z-coordinate axis direction, the yaw angle information, the pitch angle information, and the roll angle information that are of the surrounding vehicle numbered $i$ and that are at the moment $t$, $lx_{i\_t}$ and $ly_{i\_t}$ respectively represent information about a horizontal distance and information about a vertical distance between the surrounding vehicle numbered $i$ and the to-be-positioned vehicle at the moment $t$, and $lyaw_{i\_t}$ represents information about an angle difference between the surrounding vehicle numbered $i$ and the to-be-positioned vehicle at the moment $t$.

8. The method according to any one of claims 1 to 7, wherein before the determining a first position reckoning result of the surrounding vehicle based on the initial position information of the to-be-positioned vehicle and the vehicle information of the surrounding vehicle, the method further comprises:
   determining whether the GPS position covariance is greater than the preset position covariance threshold, and if the GPS position covariance is greater than the preset position covariance threshold, performing the determining a first position reckoning result of the surrounding vehicle based on the initial position information of the to-be-positioned vehicle and the vehicle information of the surrounding vehicle.

9. The method according to any one of claims 1 to 8, wherein when a quantity N of surrounding vehicles is greater than 1, N vehicles of the surrounding vehicles correspond to N first position reckoning results, and the determining a second position reckoning result of the to-be-positioned vehicle based on the first position reckoning result comprises:
   respectively determining, based on the N first position reckoning results, N second position reckoning results corresponding to the to-be-positioned vehicle, calculating a positioning result average value of the N second position reckoning results, and using the positioning result average value as a final second position reckoning result of the to-be-positioned vehicle.

10. The method according to any one of claims 1 to 9, wherein the method further comprises:

    obtaining a GPS positioning result and an inertial measurement unit, IMU, reckoning result; and
    determining a final positioning result of the to-be-positioned vehicle based on the GPS positioning result and the IMU reckoning result and with reference to the second position reckoning result by using an extended Kalman filter.

11. A vehicle positioning apparatus, comprising:

    a position covariance obtaining module, configured to obtain a global positioning system, GPS, position covariance of a to-be-positioned vehicle;
    a vehicle information obtaining module, configured to: when the GPS position covariance is less than or equal to a preset position covariance threshold, obtain initial position information of the to-be-positioned vehicle and vehicle information of a surrounding vehicle, wherein the surrounding vehicle is a vehicle whose distance from the to-be-positioned vehicle is less than a preset distance threshold, and the vehicle information comprises distance information and vehicle speed information;
    a first position reckoning module, configured to determine a first position reckoning result of the surrounding vehicle based on the initial position information of the to-be-positioned vehicle and the vehicle information of the surrounding vehicle; and
    a second position reckoning module, configured to determine a second position reckoning result of the to-be-positioned vehicle based on the first position reckoning result.

12. The apparatus according to claim 11, wherein the vehicle information of the surrounding vehicle further comprises identification information of the surrounding vehicle, orientation information of the surrounding vehicle, and information about an angle difference between the surrounding vehicle and the to-be-positioned vehicle, and the orientation information comprises yaw angle information of the surrounding vehicle, pitch angle information of the surrounding vehicle, and roll angle information of the surrounding vehicle;

the distance information comprises information about a horizontal distance between the surrounding vehicle and the to-be-positioned vehicle, and information about a vertical distance between the surrounding vehicle and the to-be-positioned vehicle; and

the vehicle speed information comprises the vehicle speed information of the surrounding vehicle and yaw angular velocity information of the surrounding vehicle.

13. The apparatus according to claim 12, wherein the first position reckoning module comprises:

a vehicle tracking table establishment unit, configured to establish a vehicle tracking table based on the vehicle information of the surrounding vehicle;

an initial position calculation unit, configured to obtain initial position information of the surrounding vehicle based on the vehicle tracking table and the initial position information of the to-be-positioned vehicle by using an initial position reckoning algorithm; and

a first position reckoning unit, configured to obtain the first position reckoning result based on the initial position information of the surrounding vehicle and the vehicle information of the surrounding vehicle by using a first position reckoning algorithm.

14. The apparatus according to claim 13, wherein the initial position information of the surrounding vehicle comprises first initial position coordinates $(x_{i\_t0}, y_{i\_t0}, z_{i\_t0}, yaw_{i\_t0}, pitch_{i\_t0}, roll_{i\_t0})$, the initial position information of the to-be-positioned vehicle comprises second initial position coordinates $(x_{t0}, y_{t0}, z_{t0}, yaw_{t0}, pitch_{t0}, roll_{t0})$, and the initial position reckoning algorithm comprises:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

and

$$roll_{i\_t0} = roll_{t0},$$

wherein

$x_{i\_t0}, y_{i\_t0}, z_{i\_t0}, yaw_{i\_t0}, pitch_{i\_t0}$, and $roll_{i\_t0}$ respectively represent coordinate information in a preset x-coordinate axis direction, coordinate information in a preset y-coordinate axis direction, coordinate information in a preset z-coordinate axis direction, yaw angle information, pitch angle information, and roll angle information that are of a surrounding vehicle numbered $i$ and that are at an initial moment $t_0$, $x_{t0}, y_{t0}, z_{t0}, yaw_{t0}, pitch_{t0}$, and $roll_{t0}$ respectively represent coordinate information in the preset x-coordinate axis direction, coordinate information in the preset y-coordinate axis direction, coordinate information in the preset z-coordinate axis direction, yaw angle information, pitch angle information, and roll angle information that are of the to-be-positioned vehicle at the initial moment $t_0$, $lx_{i\_t0}$ and $ly_{i\_t0}$ respectively represent information about a horizontal distance and information about a vertical distance between the surrounding vehicle numbered $i$ and the to-be-positioned vehicle at the initial moment $t_0$, and $lyaw_{i\_t0}$ represents information about an angle difference between the surrounding vehicle numbered $i$ and the to-be-positioned vehicle at the initial moment $t_0$.

15. A computer-readable storage medium, wherein the computer-readable storage medium stores a computer program, the computer program comprises program instructions, and when the program instructions are executed by a processor, the method according to any one of claims 1 to 10 is performed.

**Patentansprüche**

1. Verfahren zum Positionieren eines Fahrzeugs, umfassend:

Erlangen einer Positionskovarianz eines zu positionierenden Fahrzeugs über ein globales Positionierungssystem, GPS;
wenn die GPS-Positionskovarianz kleiner oder gleich einem voreingestellten Positionskovarianzschwellenwert ist, Erlangen von Anfangspositionsinformationen des zu positionierenden Fahrzeugs und Fahrzeuginformationen eines umgebenden Fahrzeugs, wobei das umgebende Fahrzeug ein Fahrzeug ist, dessen Abstand von dem zu positionierenden Fahrzeug kleiner als ein voreingestellter Abstandsschwellenwert ist, und die Fahrzeuginformationen Abstandsinformationen und Fahrzeuggeschwindigkeitsinformationen umfassen;
Ermitteln eines ersten Positionsbestimmungsergebnisses des umgebenden Fahrzeugs basierend auf den Anfangspositionsinformationen des zu positionierenden Fahrzeugs und den Fahrzeuginformationen des umgebenden Fahrzeugs; und
Ermitteln eines zweiten Positionsbestimmungsergebnisses des zu positionierenden Fahrzeugs basierend auf dem ersten Positionsbestimmungsergebnis.

2. Verfahren nach Anspruch 1, wobei die Fahrzeuginformationen des umgebenden Fahrzeugs ferner Identifikationsinformationen des umgebenden Fahrzeugs, Orientierungsinformationen des umgebenden Fahrzeugs und Informationen über einen Winkelunterschied zwischen dem umgebenden Fahrzeug und dem zu positionierenden Fahrzeug umfassen und die Orientierungsinformationen Gierwinkelinformationen des umgebenden Fahrzeugs, Nickwinkelinformationen des umgebenden Fahrzeugs und Rollwinkelinformationen des umgebenden Fahrzeugs umfassen;

die Abstandsinformationen Informationen über einen horizontalen Abstand zwischen dem umgebenden Fahrzeug und dem zu positionierenden Fahrzeug und Informationen über einen vertikalen Abstand zwischen dem umgebenden Fahrzeug und dem zu positionierenden Fahrzeug umfassen; und
die Fahrzeuggeschwindigkeitsinformationen die Fahrzeuggeschwindigkeitsinformationen des umgebenden Fahrzeugs und Gierwinkelgeschwindigkeitsinformationen des umgebenden Fahrzeugs umfassen.

3. Verfahren nach Anspruch 2, wobei das Ermitteln eines ersten Positionsbestimmungsergebnisses des umgebenden Fahrzeugs basierend auf den Anfangspositionsinformationen des zu positionierenden Fahrzeugs und den Fahrzeuginformationen des umgebenden Fahrzeugs Folgendes umfasst:

Erstellen einer Fahrzeugortungstabelle basierend auf den Fahrzeuginformationen des umgebenden Fahrzeugs;
Erlangen von Anfangspositionsinformationen des umgebenden Fahrzeugs basierend auf der Fahrzeugortungstabelle und den Anfangspositionsinformationen des zu positionierenden Fahrzeugs unter Verwendung eines Anfangspositionsbestimmungsalgorithmus; und
Erlangen des ersten Positionsbestimmungsergebnisses basierend auf den Anfangspositionsinformationen des umgebenden Fahrzeugs und den Fahrzeuginformationen des umgebenden Fahrzeugs unter Verwendung eines ersten Positionsbestimmungsalgorithmus.

4. Verfahren nach Anspruch 3, wobei die Anfangspositionsinformationen des umgebenden Fahrzeugs erste Anfangspositionskoordinaten $(x_{i\_t0}, y_{i\_t0}, z_{i\_t0}, yaw_{i\_t0}, pitch_{i\_t0}, roll_{i\_t0})$ umfassen, die Anfangspositionsinformationen des zu positionierenden Fahrzeugs zweite Anfangspositionskoordinaten $(x_{t0}, y_{t0}, z_{t0}, yaw_{t0}, pitch_{t0}, roll_{t0})$ umfassen und der Anfangspositionsbestimmungsalgorithmus Folgendes umfasst:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

und

$$roll_{i\_t0} = roll_{t0},$$

wobei

$x_{i\_t0}$, $y_{i\_t0}$, $z_{i\_t0}$, $yaw_{i\_t0}$, $pitch_{i\_t0}$ und $roll_{i\_t0}$ Koordinateninformationen in einer voreingestellten x-Koordinatenachsenrichtung, Koordinateninformationen in einer voreingestellten y-Koordinatenachsenrichtung, Koordinateninformationen in einer voreingestellten z-Koordinatenachsenrichtung, Gierwinkelinformationen, Nickwinkelinformationen bzw. Rollwinkelinformationen darstellen, die zu einem umgebenden Fahrzeug mit der Nummer i gehören und die zu einem Anfangszeitpunkt $t_0$ vorliegen, $x_{t0}$, $y_{t0}$, $z_{t0}$, $yaw_{t0}$, $pitch_{t0}$ und $roll_{t0}$ Koordinateninformationen in der voreingestellten x-Koordinatenachsenrichtung, Koordinateninformationen in der voreingestellten y-Koordinatenachsenrichtung, Koordinateninformationen in der voreingestellten z-Koordinatenachsenrichtung, Gierwinkelinformationen, Nickwinkelinformationen bzw. Rollwinkelinformationen darstellen, die zu dem zu positionierenden Fahrzeug zu dem Anfangszeitpunkt $t_0$ gehören, $lx_{i\_t0}$ und $ly_{i\_t0}$ Informationen über einen horizontalen Abstand bzw. Informationen über einen vertikalen Abstand zwischen dem umgebenden Fahrzeug mit der Nummer $i$ und dem zu positionierenden Fahrzeug zu dem Anfangszeitpunkt $t_0$ darstellen und $lyaw_{i\_t0}$ Informationen über einen Winkelunterschied zwischen dem umgebenden Fahrzeug mit der Nummer $i$ und dem zu positionierenden Fahrzeug zu dem Anfangszeitpunkt $t_0$ darstellt.

5. Verfahren nach Anspruch 3 oder 4, wobei das erste Positionsbestimmungsergebnis erste Positionsbestimmungskoordinaten $x_{i\_t}$, $y_{i\_t}$, $z_{i\_t}$, $yaw_{i\_t}$, $pitch_{i\_t}$ und $roll_{i\_t}$ umfasst und der erste Positionsbestimmungsalgorithmus Folgendes umfasst:

$$yaw_{i\_t} = yaw_{i\_t-\Delta t} + yawrate_{i\_t} * \Delta t;$$

$$pitch_{i\_t} = pitch_{i\_t-\Delta t};$$

$$roll_{i\_t} = roll_{i\_t-\Delta t};$$

$$x_{i\_t} = x_{i\_t-\Delta t} + v_{i\_t} * \cos yaw_{i\_t} * \Delta t;$$

$$y_{i\_t} = y_{i\_t-\Delta t} + v_{i\_t} * \sin yaw_{i\_t} * \Delta t;$$

und

$$z_{i\_t} = z_{i\_t-\Delta t},$$

wobei

$x_{i\_t}$, $y_{i\_t}$, $z_{i\_t}$, $yaw_{i\_t}$, $pitch_{i\_t}$ und $roll_{i\_t}$ Koordinateninformationen in der voreingestellten x-Koordinatenachsenrichtung, Koordinateninformationen in der voreingestellten y-Koordinatenachsenrichtung, Koordinateninformationen in der voreingestellten z-Koordinatenachsenrichtung, Gierwinkelinformationen, Nickwinkelinformationen bzw. Rollwinkelinformationen darstellen, die zu dem umgebenden Fahrzeug mit der Nummer $i$ gehören und die zu einem Zeitpunkt $t$ vorliegen, $x_{i\_t-\Delta t}$, $y_{i\_t-\Delta t}$, $z_{i\_t-\Delta t}$, $yaw_{i\_t-\Delta t}$, $pitch_{i\_t-\Delta t}$ und $roll_{i\_t-\Delta t}$ Koordinateninformationen in der voreingestellten x-Koordinatenachsenrichtung, Koordinateninformationen in der voreingestellten y-Koordinatenachsenrichtung, Koordinateninformationen in der voreingestellten z-Koordinatenachsenrichtung, Gierwinkelinformationen, Nickwinkelinformationen bzw. Rollwinkelinformationen darstellen, die zu dem umgebenden Fahrzeug mit der Nummer i gehören und die zu dem Zeitpunkt $t-\Delta t$ vorliegen, $yawrate_{i\_t}$ Gierwinkelgeschwindigkeitsinformationen darstellt, die zu dem umgebenden Fahrzeug mit der Nummer $i$ gehören und die zu dem Zeitpunkt $t$ vorliegen, $\Delta t$ ein voreingestelltes Zeitintervall ist und $v_{i\_t}$ Fahrzeuggeschwindigkeitsinformationen darstellt, die zu dem umgebenden Fahrzeug mit der Nummer $i$ gehören und die zu dem Zeitpunkt $t$ vorliegen.

6. Verfahren nach einem der Ansprüche 1 bis 5, wobei das Ermitteln eines zweiten Positionsbestimmungsergebnisses des zu positionierenden Fahrzeugs basierend auf dem ersten Positionsbestimmungsergebnis Folgendes umfasst:

Erlangen der Informationen über den Winkelunterschied zwischen dem umgebenden Fahrzeug und dem zu positionierenden Fahrzeug, der Informationen über den horizontalen Abstand zwischen dem umgebenden Fahrzeug und dem zu positionierenden Fahrzeug und der Informationen über den vertikalen Abstand zwischen dem umgebenden Fahrzeug und dem zu positionierenden Fahrzeug; und

Erlangen des zweiten Positionsbestimmungsergebnisses in Bezug auf das erste Positionsbestimmungsergebnis unter Verwendung eines zweiten Positionsbestimmungsalgorithmus.

7. Verfahren nach Anspruch 6, wobei das zweite Positionsbestimmungsergebnis zweite Positionsbestimmungskoordinaten ($x_t$, $y_t$, $z_t$, $yaw_t$, $pitch_t$, $roll_t$) umfasst und der zweite Positionsbestimmungsalgorithmus Folgendes umfasst:

$$x_t = x_{i\_t} - lx_{i\_t};$$

$$y_t = y_{i\_t} - ly_{i\_t};$$

$$z_t = z_{i\_t};$$

$$yaw_t = yaw_{i\_t} - lyaw_{i\_t};$$

$$pitch_t = pitch_{i\_t};$$

und

$$roll_t = roll_{i\_t},$$

wobei

$x_t$, $y_t$, $z_t$, $yaw_t$, $pitch_t$ und $roll_t$ Koordinateninformationen in der voreingestellten x-Koordinatenachsenrichtung, Koordinateninformationen in der voreingestellten y-Koordinatenachsenrichtung, Koordinateninformationen in der voreingestellten z-Koordinatenachsenrichtung, Gierwinkelinformationen, Nickwinkelinformationen bzw. Rollwinkelinformationen darstellen, die zu dem zu positionierenden Fahrzeug zu dem Zeitpunkt $t$ gehören, $x_{i\_t}$, $y_{i\_t}$, $z_{i\_t}$, $yaw_{i\_t}$, $pitch_{i\_t}$ und $roll_{i\_t}$ die Koordinateninformationen in der voreingestellten x-Koordinatenachsenrichtung, die Koordinateninformationen in der voreingestellten y-Koordinatenachsenrichtung, die Koordinateninformationen in der voreingestellten z-Koordinatenachsenrichtung, die Gierwinkelinformationen, die Nickwinkelinformationen bzw. die Rollwinkelinformationen darstellen, die zu dem umgebenden Fahrzeug mit der Nummer i gehören und die zu dem Zeitpunkt $t$ vorliegen, $lx_{i\_t}$ und $ly_{i\_t}$ Informationen über einen horizontalen Abstand bzw. Informationen über einen vertikalen Abstand zwischen dem umgebenden Fahrzeug mit der Nummer $i$ und dem zu positionierenden Fahrzeug zu dem Zeitpunkt $t$ darstellen und $lyaw_{i\_t}$ Informationen über einen Winkelunterschied zwischen dem umgebenden Fahrzeug mit der Nummer $i$ und dem zu positionierenden Fahrzeug zu dem Zeitpunkt $t$ darstellt.

8. Verfahren nach einem der Ansprüche 1 bis 7, wobei das Verfahren vor dem Ermitteln eines ersten Positionsbestimmungsergebnisses des umgebenden Fahrzeugs basierend auf den Anfangspositionsinformationen des zu positionierenden Fahrzeugs und den Fahrzeuginformationen des umgebenden Fahrzeugs ferner Folgendes umfasst:

Ermitteln, ob die GPS-Positionskovarianz größer als der voreingestellte Positionskovarianzschwellenwert ist, und, wenn die GPS-Positionskovarianz größer als der voreingestellte Positionskovarianzschwellenwert ist, Durchführen des Ermittelns eines ersten Positionsbestimmungsergebnisses des umgebenden Fahrzeugs basierend auf den Anfangspositionsinformationen des zu positionierenden Fahrzeugs und den Fahrzeuginformationen des umgebenden Fahrzeugs.

9. Verfahren nach einem der Ansprüche 1 bis 8, wobei, wenn eine Menge N von umgebenden Fahrzeugen größer als 1 ist, N Fahrzeuge der umgebenden Fahrzeuge N ersten Positionsbestimmungsergebnissen entsprechen und das Ermitteln eines zweiten Positionsbestimmungsergebnisses des zu positionierenden Fahrzeugs basierend auf dem ersten Positionsbestimmungsergebnis Folgendes umfasst:

Ermitteln, basierend auf den N ersten Positionsbestimmungsergebnissen, von N zweiten Positionsbestimmungsergebnissen, die dem zu positionierenden Fahrzeug entsprechen, Berechnen eines Positionierungsergebnisdurchschnittswerts der N zweiten Positionsbestimmungsergebnisse bzw. Verwenden des Positionierungsergebnisdurchschnittswerts als endgültiges zweites Positionsbestimmungsergebnis des zu positionierenden Fahrzeugs.

10. Verfahren nach einem der Ansprüche 1 bis 9, wobei das Verfahren ferner Folgendes umfasst:

Erlangen eines GPS-Positionierungsergebnisses und eines Trägheitsmesseinheits-Bestimmungsergebnisses, IMU-Bestimmungsergebnisses; und

Ermitteln eines endgültigen Positionierungsergebnisses des zu positionierenden Fahrzeugs basierend auf dem GPS-Positionierungsergebnis und dem IMU-Bestimmungsergebnis und unter Bezugnahme auf das zweite Positionsbestimmungsergebnis unter Verwendung eines erweiterten Kalman-Filters.

11. Vorrichtung zum Positionieren eines Fahrzeugs, umfassend:

ein Modul zum Erlangen der Positionskovarianz, das dazu konfiguriert ist, die Positionskovarianz eines zu positionierenden Fahrzeugs über ein globales Positionierungssystem, GPS, zu erlangen;

ein Modul zum Erlangen der Fahrzeuginformationen, das zu Folgendem konfiguriert ist: wenn die GPS-Positionskovarianz kleiner oder gleich einem voreingestellten Positionskovarianzschwellenwert ist, Erlangen von Anfangspositionsinformationen des zu positionierenden Fahrzeugs und Fahrzeuginformationen eines umgebenden Fahrzeugs, wobei das umgebende Fahrzeug ein Fahrzeug ist, dessen Abstand von dem zu positionierenden Fahrzeug kleiner als ein voreingestellter Abstandsschwellenwert ist, und die Fahrzeuginformationen Abstandsinformationen und Fahrzeuggeschwindigkeitsinformationen umfassen;

ein erstes Positionsbestimmungsmodul, das dazu konfiguriert ist, ein erstes Positionsbestimmungsergebnis des umgebenden Fahrzeugs basierend auf den Anfangspositionsinformationen des zu positionierenden Fahrzeugs und den Fahrzeuginformationen des umgebenden Fahrzeugs zu ermitteln; und

ein zweites Positionsbestimmungsmodul, das dazu konfiguriert ist, ein zweites Positionsbestimmungsergebnis des zu positionierenden Fahrzeugs basierend auf dem ersten Positionsbestimmungsergebnis zu ermitteln.

12. Vorrichtung nach Anspruch 11, wobei die Fahrzeuginformationen des umgebenden Fahrzeugs ferner Identifikationsinformationen des umgebenden Fahrzeugs, Orientierungsinformationen des umgebenden Fahrzeugs und Informationen über einen Winkelunterschied zwischen dem umgebenden Fahrzeug und dem zu positionierenden Fahrzeug umfassen und die Orientierungsinformationen Gierwinkelinformationen des umgebenden Fahrzeugs, Nickwinkelinformationen des umgebenden Fahrzeugs und Rollwinkelinformationen des umgebenden Fahrzeugs umfassen;

die Abstandsinformationen Informationen über einen horizontalen Abstand zwischen dem umgebenden Fahrzeug und dem zu positionierenden Fahrzeug und Informationen über einen vertikalen Abstand zwischen dem umgebenden Fahrzeug und dem zu positionierenden Fahrzeug umfassen; und

die Fahrzeuggeschwindigkeitsinformationen die Fahrzeuggeschwindigkeitsinformationen des umgebenden Fahrzeugs und Gierwinkelgeschwindigkeitsinformationen des umgebenden Fahrzeugs umfassen.

13. Vorrichtung nach Anspruch 12, wobei das erste Positionsbestimmungsmodul Folgendes umfasst:

eine Einheit zur Erstellung einer Fahrzeugortungstabelle, die dazu konfiguriert ist, eine Fahrzeugortungstabelle basierend auf den Fahrzeuginformationen des umgebenden Fahrzeugs zu erstellen;

eine Einheit zur Berechnung der Anfangsposition, die dazu konfiguriert ist, Anfangspositionsinformationen des umgebenden Fahrzeugs basierend auf der Fahrzeugortungstabelle und den Anfangspositionsinformationen des zu positionierenden Fahrzeugs unter Verwendung eines Anfangspositionsbestimmungsalgorithmus zu erlangen; und

eine erste Einheit zur Positionsbestimmung, die dazu konfiguriert ist, das erste Positionsbestimmungsergebnis basierend auf den Anfangspositionsinformationen des umgebenden Fahrzeugs und den Fahrzeuginformationen des umgebenden Fahrzeugs unter Verwendung eines ersten Positionsbestimmungsalgorithmus zu erlangen.

14. Vorrichtung nach Anspruch 13, wobei die Anfangspositionsinformationen des umgebenden Fahrzeugs erste Anfangspositionskoordinaten $(x_{i\_t0}, y_{i\_t0}, z_{i\_t0}, yaw_{i\_t0}, pitch_{i\_t0}, roll_{i\_t0})$ umfassen, die Anfangspositionsinformationen des zu positionierenden Fahrzeugs zweite Anfangspositionskoordinaten $(x_{t0}, y_{t0}, z_{t0}, yaw_{t0}, pitch_{t0}, roll_{t0})$ umfassen und der Anfangspositionsbestimmungsalgorithmus Folgendes umfasst:

$$x_{i\_t0} = x_{t0} + lx_{i\_t0};$$

$$y_{i\_t0} = y_{t0} + ly_{i\_t0};$$

$$z_{i\_t0} = z_{t0};$$

$$yaw_{i\_t0} = yaw_{t0} + lyaw_{i\_t0};$$

$$pitch_{i\_t0} = pitch_{t0};$$

und

$$roll_{i\_t0} = roll_{t0},$$

wobei

$x_{i\_t0}$, $y_{i\_t0}$, $z_{i\_t0}$, $yaw_{i\_t0}$, $pitch_{i\_t0}$ und $roll_{i\_t0}$ Koordinateninformationen in einer voreingestellten x-Koordinatenachsenrichtung, Koordinateninformationen in einer voreingestellten y-Koordinatenachsenrichtung, Koordinateninformationen in einer voreingestellten z-Koordinatenachsenrichtung, Gierwinkelinformationen, Nickwinkelinformationen bzw. Rollwinkelinformationen darstellen, die zu einem umgebenden Fahrzeug mit der Nummer i gehören und die zu einem Anfangszeitpunkt $t_0$ *vorliegen,* $x_{t0}$, $y_{t0}$, $z_{t0}$, $yaw_{t0}$, $pitch_{t0}$ und $roll_{t0}$ Koordinateninformationen in der voreingestellten x-Koordinatenachsenrichtung, Koordinateninformationen in der voreingestellten *y*-Koordinatenachsenrichtung, Koordinateninformationen in der voreingestellten z-Koordinatenachsenrichtung, Gierwinkelinformationen, Nickwinkelinformationen bzw. Rollwinkelinformationen darstellen, die zu dem zu positionierenden Fahrzeug zu dem Anfangs-zeitpunkt $t_0$ gehören, $lx_{i\_t0}$ und $ly_{i\_t0}$ Informationen über einen horizontalen Abstand bzw. Informationen über einen vertikalen Abstand zwischen dem umgebenden Fahrzeug mit der Nummer i und dem zu positionierenden Fahrzeug zu dem Anfangszeitpunkt $t_0$ darstellen und $lyaw_{i\_t0}$ Informationen über einen Winkelunterschied zwischen dem umgebenden Fahrzeug mit der Nummer *i* und dem zu positionierenden Fahrzeug zu dem Anfangszeitpunkt $t_0$ darstellt.

**15.** Computerlesbares Speichermedium, wobei das computerlesbare Speichermedium ein Computerprogramm speichert, das Computerprogramm Programmanweisungen umfasst und, wenn die Programmanweisungen durch einen Prozessor ausgeführt werden, das Verfahren nach einem der Ansprüche 1 bis 10 durchgeführt wird.

## Revendications

**1.** Procédé de positionnement de véhicule, comprenant :

l'obtention d'une covariance de position de système de positionnement global, GPS, d'un véhicule à positionner ;
lorsque la covariance de position GPS est inférieure ou égale à un seuil de covariance de position prédéfini, l'obtention d'informations de position initiale du véhicule à positionner et d'informations de véhicule d'un véhicule environnant, dans lequel le véhicule environnant est un véhicule dont la distance par rapport au véhicule à positionner est inférieure à un seuil de distance prédéfini, et les informations de véhicule comprennent des informations de distance et des informations de vitesse de véhicule ;
la détermination d'un premier résultat de décompte de position du véhicule environnant sur la base des informations de position initiale du véhicule à positionner et des informations de véhicule du véhicule environnant ; et
la détermination d'un second résultat de décompte de position du véhicule à positionner sur la base du premier résultat de décompte de position.

**2.** Procédé selon la revendication 1, dans lequel les informations de véhicule du véhicule environnant comprennent également des informations d'identification du véhicule environnant, des informations d'orientation du véhicule environnant et des informations sur une différence d'angle entre le véhicule environnant et le véhicule à positionner, et les informations d'orientation comprennent des informations d'angle de lacet du véhicule environnant, des informations d'angle de tangage du véhicule environnant et des informations d'angle de roulis du véhicule environnant ;

les informations de distance comprennent des informations sur une distance horizontale entre le véhicule environnant et le véhicule à positionner, et des informations sur une distance verticale entre le véhicule environnant et le véhicule à positionner ; et
les informations de vitesse de véhicule comprennent les informations de vitesse de véhicule du véhicule environnant et des informations de vitesse angulaire de lacet du véhicule environnant.

3. Procédé selon la revendication 2, dans lequel la détermination d'un premier résultat de décompte de position du véhicule environnant sur la base des informations de position initiale du véhicule à positionner et des informations de véhicule du véhicule environnant comprend :

l'établissement d'une table de suivi de véhicule sur la base des informations de véhicule du véhicule environnant ;
l'obtention d'informations de position initiale du véhicule environnant sur la base de la table de suivi de véhicule et des informations de position initiale du véhicule à positionner à l'aide d'un algorithme de décompte de position initiale ; et
l'obtention du premier résultat de décompte de position sur la base des informations de position initiales du véhicule environnant et des informations de véhicule du véhicule environnant à l'aide d'un premier algorithme de décompte de position.

4. Procédé selon la revendication 3, dans lequel les informations de position initiale du véhicule environnant comprennent des premières coordonnées de position initiale ($x_{i\_t0}$, $y_{i\_t0}$, $z_{i\_t0}$, $lacet_{i\_t0}$, $tangage_{i\_t0}$, $roulis_{i\_t0}$), les informations de position initiale du véhicule à positionner comprennent des secondes coordonnées de position initiale ($x_{t0}$, $y_{t0}$, $z_{t0}$, $lace_{t0}$, $tangage_{t0}$, $roulis_{t0}$), et l'algorithme de décompte de position initiale comprend :

$$x_{i\_t0} = x_{t0} + lx_{i\_t0} ;$$

$$y_{i\_t0} = y_{t0} + ly_{i\_t0} ;$$

$$z_{i\_t0} = z_{t0} ;$$

$$lacet_{i\_t0} = lacet_{t0} + llacet_{i\_t0} ;$$

$$tangage_{i\_t0} = tangage_{t0} ;$$

et

$$roulis_{i\_t0} = roulis_{t0},$$

dans lequel
$x_{i\_t0}$, $y_{i\_t0}$, $z_{i\_t0}$, $lacet_{i\_t0}$, $tangage_{i\_t0}$, et $roulis_{i\_t0}$ représentent respectivement des informations de coordonnées dans une direction d'axe de coordonnées x prédéfinie, des informations de coordonnées dans une direction d'axe de coordonnées y prédéfinie, des informations de coordonnées dans une direction d'axe de coordonnées z prédéfinie, des informations d'angle de lacet, des informations d'angle de tangage et des informations d'angle de roulis qui sont d'un véhicule environnant numéroté i et qui sont à un instant initial $t_0$, $x_{t0}$, $y_{t0}$, $z_{t0}$, $lacet_{t0}$, $tangage_{t0}$, et $roulis_{t0}$ représentent respectivement des informations de coordonnées dans la direction d'axe de coordonnées x prédéfinie, des informations de coordonnées dans la direction d'axe de coordonnées y prédéfinie, des informations de coordonnées dans la direction d'axe de coordonnées z prédéfinie, des informations d'angle de lacet, des informations d'angle de tangage et des informations d'angle de roulis qui sont du véhicule à positionner à l'instant initial $t_0$, $lx_{i\_t0}$ et $ly_{i\_t0}$ représentent respectivement des informations sur une distance horizontale et des informations sur une distance verticale entre le véhicule environnant numéroté i et le véhicule à positionner à l'instant initial $t_0$, et $llacet_{i\_t0}$ représente des informations sur une différence d'angle entre le véhicule environnant numéroté i et le véhicule à positionner à l'instant initial $t_0$.

**5.** Procédé selon la revendication 3 ou 4, dans lequel le premier résultat de décompte de position comprend des premières coordonnées de décompte de position $X_{i\_t}$, $y_{i\_t}$, $z_{i\_t}$, $lacet_{i\_t0}$, $tangage_{i\_t}$, $roulis_{i\_t}$ et le premier algorithme de décompte de position comprend :

$$lacet_{i\_t} = lacet_{i\_t-\Delta t} + taux\ de\ lacet_{i\_t} * \Delta t ;$$

$$tangage_{i\_t} = tangage_{i\_t-\Delta t} ;$$

$$roulis_{i\_t} = roulis_{i\_t-\Delta t} ;$$

$$x_{i\_t} = x_{i\_t-\Delta t} + v_{i\_t} * \cos lacet_{i\_t} * \Delta t;$$

$$y_{i\_t} = y_{i\_t-\Delta t} + v_{i\_t} * \sin lacet_{i\_t} * \Delta t ;$$

et

$$z_{i\_t} = z_{i\_t-\Delta t},$$

dans lequel

$X_{i\_t}$, $y_{i\_t}$, $z_{i\_t}$, $lacet_{i\_t}$, $tangage_{i\_t}$ et $roulis_{i\_t}$ représentent respectivement des informations de coordonnées dans la direction d'axe de coordonnées x prédéfinie, des informations de coordonnées dans la direction d'axe de coordonnées y prédéfinie, des informations de coordonnées dans la direction d'axe de coordonnées z prédéfinie, des informations d'angle de lacet, des informations d'angle de tangage et des informations d'angle de roulis qui sont du véhicule environnant numéroté *i* et qui sont à un instant *t*, $x_{i\_t-\Delta t}$, $y_{i\_t0}$$z_{i\_t-\Delta t}$, $lacet_{i\_t-\Delta t}$, $tangage_{i\_t-\Delta t}$ et $roulis_{i\_t-\Delta t}$ représentent respectivement des informations de coordonnées dans la direction d'axe de coordonnées x prédéfinie, des informations de coordonnées dans la direction d'axe de coordonnées y prédéfinie, des informations de coordonnées dans la direction d'axe de coordonnées z prédéfinie, des informations d'angle de lacet, des informations d'angle de tangage et des informations d'angle de roulis qui sont du véhicule environnant numéroté *i* et qui sont à l'instant *t*-$\Delta t$, *taux* de $lacet_{i\_t}$ représente des informations de vitesse angulaire de lacet qui sont du véhicule environnant numéroté *i* et qui sont à l'instant *t*, $\Delta t$ est un intervalle de temps prédéfini, et $v_{i\_t}$ représente des informations de vitesse de véhicule qui sont du véhicule environnant numéroté *i*et qui sont à l'instant *t*.

**6.** Procédé selon l'une quelconque des revendications 1 à 5, dans lequel la détermination d'un second résultat de décompte de position du véhicule à positionner, sur la base du premier résultat de décompte de position, comprend :

l'obtention des informations sur la différence d'angle entre le véhicule environnant et le véhicule à positionner, des informations sur la distance horizontale entre le véhicule environnant et le véhicule à positionner, et des informations sur la distance verticale entre le véhicule environnant et le véhicule à positionner ; et
l'obtention du second résultat de décompte de position en référence au premier résultat de décompte de position à l'aide d'un second algorithme de décompte de position.

**7.** Procédé selon la revendication 6, dans lequel le second résultat de décompte de position comprend des secondes coordonnées de décompte de position ($x_t$, $y_t$, $z_t$, $lacet_t$, $tangage_t$, $roulis_t$), et le second algorithme de décompte de position comprend :

$$x_t = x_{i\_t} - lx_{i\_t} ;$$

$$y_t = y_{i\_t} - ly_{i\_t} ;$$

$$z_t = z_{i\_t} ;$$

$$lacet_t = lacet_{i\_t} - llacet_{i\_t} ;$$

$$lacet_t = lacet_{i\_t} \; ;$$

et

$$roulis_t = roulis_{i\_t},$$

dans lequel

$x_t$, $y_t$, $z_t$, $lacet_t$, $tangage_t$ et $roulis_t$ représentent respectivement des informations de coordonnées dans la direction d'axe de coordonnées x prédéfinie, des informations de coordonnées dans la direction d'axe de coordonnées y prédéfinie, des informations de coordonnées dans la direction d'axe de coordonnées z prédéfinie, des informations d'angle de lacet, des informations d'angle de tangage et des informations d'angle de roulis du qui sont du véhicule à positionner à l'instant $t$, $x_{i\_t}$, $y_{i\_t}$, $z_{i\_t}$, $lacet_{i\_t}$, $tangage_{i\_t}$ et $roulis_{i\_t}$ représentent respectivement les informations de coordonnées dans la direction d'axe de coordonnées x prédéfinie, les informations de coordonnées dans la direction d'axe de coordonnées y prédéfinie, les informations de coordonnées dans la direction d'axe de coordonnées z prédéfinie, les informations d'angle de lacet, les informations d'angle de tangage et les informations d'angle de roulis qui sont du véhicule environnant numéroté $i$ et qui sont à l'instant $t$, $lx_{i\_t}$ et $ly_{i\_t}$ représentent respectivement des informations sur une distance horizontale et des informations sur une distance verticale entre le véhicule environnant numéroté $i$ et le véhicule à positionner à l'instant $t$, et $llacet_{i\_t}$ représente des informations sur une différence d'angle entre le véhicule environnant numéroté $i$ et le véhicule à positionner à l'instant $t$.

**8.** Procédé selon l'une quelconque des revendications 1 à 7, dans lequel, avant la détermination d'un premier résultat de décompte de position du véhicule environnant sur la base des informations de position initiale du véhicule à positionner et des informations de véhicule du véhicule environnant, le procédé comprend également :
le fait de déterminer si la covariance de position GPS est supérieure au seuil de covariance de position prédéfini, et si la covariance de position GPS est supérieure au seuil de covariance de position prédéfini, la réalisation de la détermination d'un premier résultat de décompte de position du véhicule environnant sur la base des informations de position initiale du véhicule à positionner et des informations de véhicule du véhicule environnant.

**9.** Procédé selon l'une quelconque des revendications 1 à 8, dans lequel, lorsqu'une quantité N de véhicules environnants est supérieure à 1, N véhicules parmi les véhicules environnants correspondent à N premiers résultats de décompte de position, et la détermination d'un second résultat de décompte de position du véhicule à positionner, sur la base du premier résultat de décompte de position, comprend :
la détermination respectivement, sur la base des N premiers résultats de décompte de position, de N seconds résultats de décompte de position correspondant au véhicule à positionner, le calcul d'une valeur moyenne de résultat de positionnement des N seconds résultats de décompte de position, et l'utilisation de la valeur moyenne de résultat de positionnement comme second résultat de décompte de position final du véhicule à positionner.

**10.** Procédé selon l'une quelconque des revendications 1 à 9, dans lequel le procédé comprend également :

l'obtention d'un résultat de positionnement GPS et d'un résultat de décompte d'unité de mesure inertielle, IMU ; et
la détermination d'un résultat de positionnement final du véhicule à positionner sur la base du résultat de positionnement GPS et du résultat de décompte IMU et en référence au second résultat de décompte de position à l'aide d'un filtre de Kalman étendu.

**11.** Appareil de positionnement de véhicule, comprenant :

un module d'obtention de covariance de position, configuré pour obtenir une covariance de position de système de positionnement global, GPS, d'un véhicule à positionner ;
un module d'obtention d'informations de véhicule, configuré pour : lorsque la covariance de position GPS est inférieure ou égale à un seuil de covariance de position prédéfini, obtenir des informations de position initiale du véhicule à positionner et des informations de véhicule d'un véhicule environnant, dans lequel le véhicule environnant est un véhicule dont la distance par rapport au véhicule à positionner est inférieure à un seuil de distance prédéfini, et les informations de véhicule comprennent des informations de distance et des informations de vitesse de véhicule ;
un premier module de décompte de position, configuré pour déterminer un premier résultat de décompte de position du véhicule environnant sur la base des informations de position initiale du véhicule à positionner et des informations de véhicule du véhicule environnant ; et
un second module de décompte de position, configuré pour déterminer un second résultat de décompte de position du véhicule à positionner sur la base du premier résultat de décompte de position.

12. Appareil selon la revendication 11, dans lequel les informations de véhicule du véhicule environnant comprennent également des informations d'identification du véhicule environnant, des informations d'orientation du véhicule environnant et des informations sur une différence d'angle entre le véhicule environnant et le véhicule à positionner, et les informations d'orientation comprennent des informations d'angle de lacet du véhicule environnant, des informations d'angle de tangage du véhicule environnant et des informations d'angle de roulis du véhicule environnant ;

les informations de distance comprennent des informations sur une distance horizontale entre le véhicule environnant et le véhicule à positionner, et des informations sur une distance verticale entre le véhicule environnant et le véhicule à positionner ; et
les informations de vitesse de véhicule comprennent les informations de vitesse de véhicule du véhicule environnant et des informations de vitesse angulaire de lacet du véhicule environnant.

13. Appareil selon la revendication 12, dans lequel le premier module de décompte de position comprend :

une unité d'établissement de table de suivi de véhicule, configurée pour établir une table de suivi de véhicule sur la base des informations de véhicule du véhicule environnant ;
une unité de calcul de position initiale, configurée pour obtenir des informations de position initiale du véhicule environnant sur la base de la table de suivi de véhicule et des informations de position initiale du véhicule à positionner à l'aide d'un algorithme de décompte de position initiale ; et
une première unité de décompte de position, configurée pour obtenir le premier résultat de décompte de position sur la base des informations de position initiales du véhicule environnant et des informations de véhicule du véhicule environnant à l'aide d'un premier algorithme de décompte de position.

14. Appareil selon la revendication 13, dans lequel les informations de position initiale du véhicule environnant comprennent des premières coordonnées de position initiale ($x_{i\_t0}$, $y_{i\_t0}$, $z_{i\_t0}$, $lacet_{i\_t0}$, $tangage_{i\_t0}$, $roulis_{i\_t0}$), les informations de position initiale du véhicule à positionner comprennent des secondes coordonnées de position initiale ($x_{t0}$, $y_{t0}$, $z_{t0}$, $lacet_{t0}$, $tangage_{t0}$, $roulis_{t0}$), et l'algorithme de décompte de position initiale comprend :

$$x_{i\_t0} = x_{t0} + lx_{i\_t0} \; ;$$

$$y_{i\_t0} = y_{t0} + ly_{i\_t0} \; ;$$

$$z_{i\_t0} = z_{t0} \; ;$$

$$lacet_{i\_t0} = lacet_{t0} + llacet_{i\_t0} \; ;$$

$$tangage_{i\_t0} = tangage_{t0} \; ;$$

et

$$roulis_{i\_t0} = roulis_{t0},$$

dans lequel
$x_{i\_t0}$, $y_{i\_t0}$, $z_{i\_t0}$, $lacet_{i\_t0}$, $tangage_{i\_t0}$, et $roulis_{i\_t0}$ représentent respectivement des informations de coordonnées dans une direction d'axe de coordonnées x prédéfinie, des informations de coordonnées dans une direction d'axe de coordonnées y prédéfinie, des informations de coordonnées dans une direction d'axe de coordonnées z prédéfinie, des informations d'angle de lacet, des informations d'angle de tangage et des informations d'angle de roulis qui sont d'un véhicule environnant numéroté i et qui sont à un instant initial $t_0$, $x_{t0}$, $y_{t0}$, $z_{t0}$, $lacet_{t0}$, $tangage_{t0}$, et $roulis_{t0}$ représentent respectivement des informations de coordonnées dans la direction d'axe de coordonnées x prédéfinie, des informations de coordonnées dans la direction d'axe de coordonnées y prédéfinie, des informations de coordonnées dans la direction d'axe de coordonnées z prédéfinie, des informations d'angle de lacet, des informations d'angle de tangage et des informations d'angle de roulis qui sont du véhicule à positionner à l'instant initial $t_0$, $tx_{i\_t0}$ et $ly_{i\_t0}$ représentent respectivement des informations sur une distance horizontale et des informations sur une distance verticale entre le véhicule environnant numéroté i et le véhicule à positionner à l'instant initial $t_0$, et $llacet_{i\_t0}$ représente des informations sur une différence d'angle entre le véhicule environnant numéroté i et le véhicule à positionner à l'instant initial $t_0$.

15. Support de stockage lisible par ordinateur, dans lequel le support de stockage lisible par ordinateur stocke un programme informatique, le programme informatique comprend des instructions de programme, et lorsque les instructions de programme sont exécutées par un processeur, le procédé selon l'une quelconque des revendications 1 à 10 est réalisé.

Obtain a global positioning system GPS position covariance of a to-be-positioned vehicle

/ S101

When the GPS position covariance is less than or equal to a preset position covariance threshold, obtain initial position information of the to-be-positioned vehicle and vehicle information of a surrounding vehicle

/ S102

Determine a first position reckoning result of the surrounding vehicle based on the initial position information of the to-be-positioned vehicle and the vehicle information of the surrounding vehicle

/ S103

Determine a second position reckoning result of the to-be-positioned vehicle based on the first position reckoning result

/ S104

FIG. 1

FIG. 2

| | |
|---|---|
| Establish a vehicle tracking table based on vehicle information of a surrounding vehicle | S1031 |
| Obtain initial position information of the surrounding vehicle based on the vehicle tracking table and initial position information of a to-be-positioned vehicle by using an initial position reckoning algorithm | S1032 |
| Obtain a first position reckoning result based on the initial position information of the surrounding vehicle and the vehicle information of the surrounding vehicle by using a first position reckoning algorithm | S1033 |

FIG. 3

Obtain information about an angle difference between a
surrounding vehicle and a to-be-positioned vehicle,
information about a horizontal distance between the
surrounding vehicle and the to-be-positioned vehicle, and
information about a vertical distance between the surrounding
vehicle and the to-be-positioned vehicle

S1041

Obtain a second position reckoning result with reference to a
first position reckoning result by using a second position
reckoning algorithm

S1042

FIG. 4

Obtain a global positioning system GPS position covariance of a to-be-positioned vehicle / S501

When the GPS position covariance is less than or equal to a preset position covariance threshold, obtain initial position information of the to-be-positioned vehicle and vehicle information of a surrounding vehicle / S502

Determine a first position reckoning result of the surrounding vehicle based on the initial position information of the to-be-positioned vehicle and the vehicle information of the surrounding vehicle / S503

Determine a second position reckoning result of the to-be-positioned vehicle based on the first position reckoning result / S504

Obtain a GPS positioning result and an inertial measurement unit IMU reckoning result / S505

Determine a final positioning result of the to-be-positioned vehicle based on the GPS positioning result and the IMU reckoning result and with reference to the second position reckoning result by using an extended Kalman filter / S506

FIG. 5

Vehicle positioning apparatus 600

Position covariance
obtaining module
601

Vehicle information
obtaining module
602

First position reckoning
module 603

Position covariance
determining unit
6031

Vehicle tracking table
establishment unit
6032

Initial position
calculation unit
6033

First position
reckoning unit
6034

Second position reckoning
module 604

Information
obtaining unit
6041

Second position
reckoning unit
6042

Positioning result
average value
calculation unit
6043

FIG. 6

FIG. 7

Vehicle positioning apparatus 800

Memory 801

Processor 802

Bus 804

Communications
interface 803

FIG. 8

**EP 4 215 873 B1**

**REFERENCES CITED IN THE DESCRIPTION**

**Patent documents cited in the description**

- CN 202011194287
- CN 106710281 A